Europäisches Patentamt

(19) European Patent Office

Office européen des brevets

(11) **EP 0 802 531 A2**

(12) **EUROPEAN PATENT APPLICATION**

(43) Date of publication:
22.10.1997 Bulletin 1997/43

(51) Int. Cl.$^6$: **G11B 11/10**, G11B 7/00

(21) Application number: 97106113.0

(22) Date of filing: 14.04.1997

(84) Designated Contracting States:
**DE FR GB**

(30) Priority: 17.04.1996 JP 95040/96
12.06.1996 JP 150697/96
05.09.1996 JP 234914/96

(71) Applicant: **HITACHI, LTD.**
**Chiyoda-ku, Tokyo 100 (JP)**

(72) Inventors:
• **Miyamoto, Makoto**
  **Ome-shi (JP)**
• **Ohtake, Masatoshi**
  **Ome-shi (JP)**
• **Terao, Motoyasu**
  **Nishitama-gun, Tokyo (JP)**
• **Miyauchi, Yasushi**
  **Akishima-shi (JP)**

• **Hirotsune, Akemi**
  **Higashimurayama-shi (JP)**
• **Miyamoto, Harukazu**
  **Kodaira-shi (JP)**
• **Fukui, Yukio**
  **Machida-shi (JP)**
• **Tokushuku, Nobuhiro**
  **Yokohama-shi (JP)**
• **Sugiyama, Hisataka**
  **Kodaira-shi (JP)**
• **Minemura, Hiroyuki**
  **Yokohama-shi (JP)**
• **Fushimi, Tetsuya**
  **Chigasaki-shi (JP)**

(74) Representative: **Strehl Schübel-**
**Hopf Groening & Partner**
**Maximilianstrasse 54**
**80538 München (DE)**

(54) **Information recording method and apparatus**

(57) An information recording method of and an information recording apparatus for carrying out a recording of information by irradiating an energy beam to an information recording medium (1) by modulating power of the energy beam at least at a high power level and at an intermediate power level lower than the high power level, wherein a recording is carried out in a recording waveform having a downward directed pulse toward a power level (P11) lower than the intermediate power level (Pm1) after continuous high-power pulse trains of the power level (Ph1) so that the width of the downward directed pulse is changed according to a relative speed of the energy beam and the information recording medium (1).

FIG.1

EP 0 802 531 A2

## Description

## BACKGROUND OF THE INVENTION

The present invention relates to an information recording method of recording information on an information recording medium to which information can be recorded by irradiating energy beams, and relates more particularly to an information recording method of exhibiting an excellent effect to a phase-change optical disk or an optical magnetic disk and an information recording apparatus using this information recording method.

According to a conventional method of recording and erasing information on a rewritable recording film, power of one energy beam is changed between at least two levels higher than a read-out power level, that is, at least between a high power level and an intermediate power level, for example, in the cases of the Japanese Patent application laid-open No. JP-A-62-175948, laid open on August 1 1987, in which an optical magnetic disk is used by using an exchange-coupled two-layer film as a recording film, and the Japanese Patent application laid-open No. JP-A-62-259229, laid open on November 11, 1987, in which a high-speed record erasable recording film for a phase-change type optical disk that can be crystallized in almost the same time as in a laser irradiation time for recording. This method has an advantage that it is possible to record new information while erasing existing information, a so-called overwriting.

Further, as disclosed in the Japanese Patent application laid-open No. JP-A-62-259229 and the Japanese Patent application laid-open No. JP-A-3-185629, laid open on August 13, 1991, it is possible to restrict such a phenomenon that a recording mark becomes a tear-drip type (that is, the back side of a recording mark becomes broader than the front side), by changing an energy beam between three levels of a high power level, an intermediate power level and a power level lower than the intermediate power level.

At present, the development of a digital video disk is at its final stage, and the development of a rewritable digital video disk (DVD-RAM) is also in progress. According to an optical disk apparatus for carrying out a mark edge recording on a phase-change recording film such as a DVD-RAM, an ultimate temperature and a cooling speed at the time of recording must be set at almost the same levels at any point of an outer edge section of an area of a recording film which was fused to form a recording mark on the recording film, in order to prevent an occurrence of distortion of a mark shape and a remaining of a mark without being erased. However, according to various kinds of recording waveforms which are known up to now, the above-described conditions can not be met satisfactorily and there is a limit to an achievable recording density.

On the other hand, along with the increase in the digital signal processing speed in recent years, there has been a growing demand for increasing the speed of recording and reproducing of an information recording apparatus. In order to meet this demand, it is important to increase the relative speed of the energy beam and the information recording medium.

When the relative speed of the energy beam and the information recording medium is improved, more information can be recorded and reproduced within a unit time. Therefore, this can improve the data transfer rate of an information recording and reproducing apparatus. Usually, the speed of recording on an information recording medium increases along with the progress of the generation of a product. Accordingly, by taking the compatibility between the generations into consideration, it is desirable to be able to carry out high-speed recording and reproducing of information by using one information recording and reproducing apparatus for both an information recording medium corresponding to a high-speed recording (a gradual cooling mechanism) and an information recording medium corresponding to a low-speed recording (a rapid cooling mechanism).

Further, particularly in order to achieve a high-speed recording and reproducing of information on recording tracks across the tracks of a large difference in diameters from the center of a disk-shaped information recording medium, it is important to rotate the information recording medium by keeping a constant angular velocity of the information recording medium. Since the time required for keeping constant the relative speed of an energy beam and an information recording medium (the time required for changing the angular velocity) can be saved, it is possible to shorten the access time of the recording and reproducing apparatus.

Further, as described previously, there is also a large demand for a large-capacity recording of information such as a digital-signal processed image. Accordingly, it is necessary to invent at an early stage an information recording method for enabling a high-speed and high-density recording.

In order to realize an information recording and reproducing apparatus which satisfies the above-described conditions, an information recording method is required which ensures a stable recording in each of the cases where the relative speed of an energy beam and an information recording medium is large, where the relative speed of an energy beam and an information recording medium has changed for the information recording mediums having various cooling speeds, and where an extremely high recording density has been set, respectively.

## SUMMARY OF THE INVENTION

Although the above-described prior-art technique is a very excellent idea, it has been made clear that it can not be said that sufficient consideration is not given to the case where there is a large difference of cooling speed between the mediums and when the relative speed of an energy beam and an information recording medium is large, the case where there is a difference in the cooling speed along with the change in the relative speed, and the case where such a high-density recording that the distance between recording marks is not larger than half of an energy beam spot is carried out.

For example, when a recording is carried out by irradiating an energy beam of high power level to an information recording medium having a low cooling speed, because of the heat accumulated in the recording film and the protection film on both sides of the recording film, the temperature of a position where an irradiation is carried out later becomes higher. Thus, the rear side of the recording mark extends to a direction perpendicular to a recording track (tear-drip type), and a distortion occurs in a reproduced signal. According to the above-described prior-art technique, in order to prevent the recording mark from being distorted in a tear-drip shape, the energy density of the forward section of a series of high-power pulse trains is made high, or the power level between the high-power pulses is made lower than the intermediate power level.

Accordingly, when the relative speed of an energy beam and an information recording medium has increased or when a recording has been carried out on an information recording medium of which cooling speed is relatively high, there is a tendency that the front portion of the recording mark becomes larger than the rear portion (an inverted tear-drip type). When a signal from this portion is reproduced, a reproduced signal which correctly corresponds to a recording signal can not be obtained because there is a distortion in the reproduced signal.

Further, when such a high-density recording is carried out as that the distance between recording marks is not larger than half of an energy beam spot, the distance between the recording marks becomes smaller and, therefore, a distortion occurs in the recording marks by being affected by a heat (thermal interference) which is generated at the time of recording the recording marks before or after the corresponding recording mark. In order to restrict this thermal interference, the prior-art technique has taken a measure to lower the power level of the energy beam (laser power level) than the erasing power level after the recording pulse. However, a technique for further restricting the thermal interference becomes necessary for a high-speed recording or a high-density recording, particularly when the length of the shortest mark and the length of the shortest space are not larger than 1 μm or when the relative speed of the laser beam and the recording medium is not lower than 9 m/s.

Accordingly, it is an object of the present invention to provide an information recording method and an information recording apparatus which enable an accurate recording in the cases where a recording density is high for information recording mediums having various cooling speeds, where the relative speed of the energy beam and the information recording medium is large, and where the relative speed has changed, respectively.

Further, a technique for narrowing a track pitch has been developed in order to achieve a high-density recording. For example, there is a method for recording information both within a groove and on a land (an area between grooves) provided on the information recording medium. According to this method, cross-talking of a reproduced signal from the land to the groove or from the groove to the land can be cancelled by setting a depth of grooves (an optical phase difference between the land the groove) at a suitable value.

However, since a heat generated by an energy beam is utilized for recording information, there occurs a thermal interference to an adjacent track (a groove adjacent to a land or a land adjacent to a groove) when the control of the position of the energy beam has become unstable (for example, particularly when a track offset has occurred). Therefore, information recorded on the adjacent track is erased.

Accordingly, it is another object of the present invention to provide an information recording method and an information recording apparatus which enable an accurate recording of information without erasing information on adjacent tracks even in the case where information is recorded on an information recording medium of a narrow track pitch which is not larger than an energy beam for recording, particularly on an information recording medium corresponding to a land-groove recording.

Further, the improvement of recording sensitivity is also a big task to be achieved. Usually, when the relative speed of an information recording medium and an energy beam is increased, the passage time of the energy at a recording point on the information recording medium is shortened, so that the quantity of energy to be irradiated on to the information recording medium within a unit time is lowered and thus the recording point is not heated sufficiently (that is the recording sensitivity is lowered). Further, when a recording is carried out on the information recording medium which can easily store heat, the recording point is kept at a high temperature for a long time so that the recording point is deteriorated by the heat. Accordingly, in order to improve the reliability of the information recording medium, a heat radiation layer of high thermal conductivity such as a metal is provided in the information recording medium so that the heat at the heated portion is diffused quickly. In this case, the recording sensitivity is lowered because energy is irradiated while also diffusing the heat at the time of recording as well.

Accordingly, it is another object of the present invention to provide an information recording method and an information recording apparatus which enable an accurate recording of information without lowering the recording sensitivity even when the relative speed of the information recording medium and the energy beam for recording is increased or when a recording is carried out on the information recording medium having the structure which is easily cooled rapidly.

According to one aspect of the present invention, there is provided (1) an information recording method for carrying out a recording of information by irradiating an energy beam to an information recording medium by modulating power of the energy beam at least at a high power level and at an intermediate power level lower than the high power level, wherein a recording is carried out in a recording waveform having a downward directed pulse toward a power level lower than the intermediate power level after continuous high-power pulse trains so that the width of the downward directed pulse is changed according to a relative speed of an energy beam and the information recording medium.

When the above-described information recording method is used, the cooling speed at the rear portion of the recording mark can be controlled by changing the width of the downward directed pulse, with the following effect.

Usually, when the relative speed of the energy beam and the information recording medium is low, a recording mark tends to be formed in a tear-drip shape. In this case, the width of the rear portion of the recording mark can be made smaller by making low the cooling speed at the rear portion of the recording mark. Further, when the relative speed of the energy beam and the information recording medium is high, a recording mark tends to be formed in an inverse tear-drip shape. In this case, the width of the rear portion of the recording mark can be made larger by making high the cooling speed at the rear portion of the recording mark.

According to another aspect of the present invention, there is provided (2) an information recording method for carrying out a recording of information by irradiating an energy beam to an information recording medium by modulating power of the energy beam at least at a high power level and at an intermediate power level lower than the high power level and for carrying out a test writing to the information recording medium prior to a recording of information, wherein at the time of the test writing, a recording is carried out in a recording waveform having a downward directed pulse toward a power level lower than the intermediate power level after continuous high-power pulse trains so that the width of the downward directed pulse is changed accordingly.

According to the above-described information recording method, when information is to be recorded on an information recording medium of a gradual cooling structure in which a recording mark tends to be in a tear-drip shape, the width of the rear portion of the recording mark can be made smaller by making lower the cooling speed at the rear portion of the recording mark. When information is to be recorded on an information recording medium of a rapid cooling structure in which a recording mark tends to be in an inverse tear-drip shape, the width of the rear portion of the recording mark can be made larger by making higher the cooling speed at the rear portion of the recording mark.

In the above-described information recording method, there is particularly a large effect to the information recording medium in which information is recorded by utilizing a change of phase between crystal and amorphous (the so-called phase-change recording medium).

Further, since the thermal interference at the time of recording the recording marks before and after the corresponding recording mark can be restricted substantially by changing the with of the downward directed pulse, the distance between the recording marks can be made smaller. Accordingly, it becomes possible to achieve a high-density recording. This effect is large not only for the phase-change recording medium but also for the information recording medium for carrying out a recording of information by utilizing a heat generated by an irradiation of an energy beam in general, such as an optical magnetic disk.

The effect of the present invention is obtained when the downward directed pulse as described in (1) and (2) above is applied to between the end tail pulse of continuous high-power pulses and the header pulse of the next continuous high-power pulse trains, and particularly a large effect can be obtained when the downward directed pulse is applied immediately after the end tail pulse of the continuous high-power pulse trains.

In the present specification, the continuous high-power pulse trains refer to high-power pulse trains disposed with almost an equal distance therebetween, usually shorter than a distance between channel clocks, which are required for forming one recording mark. Accordingly, when one recording mark is recorded with only a single high-power pulse, this is also called a continuous high power train.

Further, when the product of an irradiation time of the above-described downward directed pulse and the relative speed of an energy beam and an information recording medium is not larger than one third of the spot diameter of the energy beam (that is a distance of an area not smaller than an exp. (- 2) of the central intensity of the energy beam in the direction of a recording track), the distortion of a reproduced signal becomes particularly small, which is most suitable for a high-density recording. When the product of an irradiation time of the above-described downward directed pulse and the relative speed of an energy beam and an information recording medium is not smaller than one third of the spot diameter of the energy beam, the erasing by the intermediate power level (crystallization, in the case of a phase-change recording film) is not carried out satisfactorily, so that the quality of the signal is deteriorated.

According to another aspect of the present invention, there is provided (3) an information recording method for carrying out a recording of information by forming recording marks of a plurality of lengths by irradiating an energy beam to an information recording medium by modulating power of the energy beam at least at a high power level and at an intermediate power level lower than the high power level, wherein at least a shortest mark is recorded by using continuous high power trains and a power level of a header pulse is higher than a power level of a last high-power pulse. This method is suitable for a high-density recording because the width of the front portion of a recording mark and the width of the rear portion of the recording mark can be controlled independently. When a shortest mark is recorded by using one high-power pulse, this means that the header pulse and the end tail pulse coincide with each other. Therefore, when there is also only one kind of height for a high-power pulse, it becomes impossible to independently control the width of the front portion of the recording mark and the rear portion of the recording mark, so that a special consideration needs to be taken to match the cooling speed of an information recording medium with the recording waveform in order to achieve a high-density recording. Further, when the power level of the header pulse is lower than the power level of the end tail high-power pulse, the quantity of energy to be irradiated to the front portion of the recording mark becomes in shortage and the recording mark becomes a tear-drip shape, which is not desirable.

According to another aspect of the present invention, there is provided (4) an information recording method for recording information by forming marks having a plurality of lengths by irradiating beams having energy on an information recording medium, wherein at the time of recording one of the marks, the energy beams are irradiated as pulse trains, and a falling level of the pulse trains nearest to a header of the mark is set at level higher than a falling level of a pulse train which follows next, or an information recording method for carrying out a recording of information by forming recording marks of a plurality of lengths by irradiating an energy beam to an information recording medium by modulating power of the energy beam at least at a high power level and at an intermediate power level lower than the high power level, wherein at least a shortest mark is recorded by using continuous high power trains and a power level immediately after a header pulse is not lower than a power level immediately after a high-power pulse other than the header pulse. This information recording method is suitable for a high-density recording because the width of the front portion of a recording mark and the width of the rear portion of the recording mark can be controlled independently. When the power level immediately after the header pulse is lower than the power level immediately after the high-power pulse other than the header pulse, the quantity of energy to be irradiated to the front portion of the recording mark becomes in shortage and the recording mark becomes a tear-drip shape, which is not desirable.

It is further suitable for a high-density recording to use an information recording method having both characteristics described in (3) and (4) above, that is, the information recording method in which at least a shortest mark is recorded by using a plurality of high-power pulses, the power level of a header pulse is higher than the power level of the last high-power pulse and the power level immediately after the header pulse is not lower than the power level immediately after the high-power pulse other than the header pulse.

The recording waveform described in (3) and (4) above is effective for the control of the mark shape of the header portion of the recording mark, and particularly a large effect can be obtained when this recording mark is used together with the information recording method as described in (1) and (2) above which are effective for controlling the mark shape of the rear portion of the recording mark.

According to another aspect of the present invention, there is provided (5) an information recording apparatus for carrying out a recording of information by irradiating an energy beam to an information recording medium by modulating power of the energy beam at least at a high power level and at an intermediate power level lower than the high power level, wherein the information recording apparatus has a recording waveform generator for generating a recording waveform having a downward directed pulse toward a power level lower than the intermediate power level after continuous high-power pulse trains so that the width of the downward directed pulse is changed according to a relative speed of an energy beam and the information recording medium.

According to another aspect of the present invention, there is provided (6) an information recording apparatus for carrying out a recording of information by irradiating an energy beam to an information recording medium by modulating power of the energy beam at least at a high power level and at an intermediate power level lower than the high power level and for carrying out a test writing to the information recording medium prior to a recording of information, wherein the information recording apparatus has a recording waveform generator for generating, at the time of the test writing, a recording waveform having a downward directed pulse toward a power level lower than the intermediate power level after continuous high-power pulse trains so that the width of the downward directed pulse is changed accordingly. When this information recording apparatus is used, it becomes possible to realize the information recording methods shown in (1) and (2) above, and therefore, a high-density recording can be achieved even when the relative speed of the energy beam and the information recording medium has changed.

According to another aspect of the present invention, there is provided (7) an information recording apparatus for carrying out a recording of information by forming recording marks of a plurality of lengths by irradiating an energy beam to an information recording medium by modulating power of the energy beam at least at a high power level and at an intermediate power level lower than the high power level, wherein the information recording apparatus has a recording waveform generator for generating continuous high power trains at least at the time of recording a shortest mark and for making a power level of a header pulse higher than a power level of a last pulse.

According to another aspect of the present invention, there is provided (8) an information recording apparatus for carrying out a recording of information by forming recording marks of a plurality of lengths by irradiating an energy beam to an information recording medium by modulating power of the energy beam at least at a high power level and at an intermediate power level lower than the high power level, wherein the information recording apparatus has a recording waveform generator for generating continuous high power trains at least at the time of recording a shortest mark and for making a power level immediately after a header pulse not lower than a power level immediately after a high-power pulse other than the header pulse. When this information recording apparatus is used, it becomes possible to realize the information recording methods shown in (3) and (4) above, and therefore, a high-density recording can be achieved for information recording mediums having various cooling speeds.

It is further suitable for a high-density recording to use an information recording apparatus having a recording waveform generator which uses the information recording methods described in both (3) and (4) above, that is, the information recording apparatus having a recording waveform generator which generates a plurality of high-power pulses at the time of recording at least a shortest mark and in which the power level of a header pulse is higher than the power level of the last high-power pulse and the power level immediately after the header pulse is not lower than the power level immediately after the high-power pulse other than the header pulse.

As described above, there is particularly a large control effect of the recording mark shape by using both the information recording methods (1) and (2) described above and the information recording methods (3) and (4) described above, and, even if the relative speed of an energy beam and an information recording medium has changed, a high-density recording can be achieved for information recording mediums having various cooling speeds by using both the recording waveform generators shown in (5) and (6) above and the recording waveform generators shown in (7) and (8) above and by using the information recording apparatus which can generate recording waveforms.

Further, the effect of the present invention can be obtained when the above-described power level of the downward directed pulse to be added after the continuous high-power pulses is lower than the intermediate power level at which the recording mark can be erased. Particularly, when the above-described power level of the down directed pulse is not higher than the reproduction power level for reproducing information which is lower than the intermediate power level, not only the recording waveform of the present invention can be formed easily but also there is a larger effect of controlling the cooling speed on the medium. Therefore, there is also a larger effect of achieving a high-density recording on the information recording mediums having various cooling speeds even if the relative speed of the energy beam and the information recording medium has changed.

Further, when an information recording medium is used according to which an amorphous recording mark is recorded in a crystal and crystal particles larger than the crystal particles of this crystal exists in the periphery of the recording mark, the width of a re-crystallization area can be easily controlled at an ultimate temperature and at a cooling speed. Accordingly, the recording mark does not easily become a tear-drip shape or an inverse tear-drip shape, so that variations in the size of the recording mark can be restricted to the minimum. Therefore, a reproduction signal faithful to the recording waveform can be obtained. However, the present invention can also be applied to recording mediums of other characteristics such as a recording medium whole of which is occupied by large crystalline grains.

According to another aspect of the present invention, there is provided (9) an information recording method for carrying out a recording of information by irradiating an energy beam to an information recording medium by modulating power of the energy beam at least at a high power level and at an intermediate power level lower than the high power level, wherein a recording is carried out in a recording waveform having a downward directed pulse toward a power level lower than the intermediate power level, between high-power pulses of continuous high-power pulse trains and immediately after the continuous high-power pulse trains, and the width of the downward directed pulse after the continuous high-power pulse trains is set at not smaller than 0.8 times and not larger than 2.2 times a clock for generating recording waveforms. When this information recording method is used, it becomes possible to achieve a high-density recording even if the width of the downward directed pulse after the continuous high-power pulse trains is made variable for information recording mediums having various cooling speeds.

According to another aspect of the present invention, there is provided (10) an information recording apparatus for carrying out a recording of information by irradiating an energy beam to an information recording medium by modulating power of the energy beam at least at a high power level and at an intermediate power level lower than the high power level, wherein the information recording apparatus has a recording waveform generator for carrying out a recording in a recording waveform having a downward directed pulse toward a power level lower than the intermediate power level, between high-power pulses of continuous high-power pulse trains and immediately after the continuous high-power pulse trains, and for setting the width of the downward directed pulse after the continuous high-power pulse trains at not smaller than 0.8 times and not larger than 2.2 times a clock for generating recording waveforms. When this information recording apparatus is used, it becomes possible to achieve the information recording method in (9) described above.

Further, according to another aspect of the present invention, there is provided (11) an information recording method described in (9) above and characterized in having the width of the downward directed pulse after the continuous high power trains set at an integer times of one half of the channel clock. When this information recording method is used, it becomes possible to make minimum the circuit scale of the recording waveform generator, which is desirable. The effect of the aspect of the present invention can be obtained even if the width of the downward directed pulse after the continuous high power trains is set at an integer times of the channel clock. When a desirability of generating a high-power pulse of not larger than the width of the channel clock is taken into consideration, the pulses divided into a width not larger than the width of the channel clock become necessary. However, this does not contribute to a smaller circuit scale of the recording waveform generator. On the other hand, when the number of splits of the channel clock is made larger such as when the width of the downward directed pulse after the continuous high-power pulse trains is set at an integer times of one third of the channel clock or an integer times of a quarter of the channel clock, this is desirable in that the width of the downward directed pulse after the continuous high-power pulse trains can be optimized with higher accuracy. However, this results in a larger circuit scale.

According to another aspect of the present invention, there is provided (12) an information recording apparatus as described in (10) above which has a recording waveform generator for setting the width of the downward directed pulse after the continuous high power trains at an integer times of one half of the channel clock. When this information recording apparatus is used, it becomes possible to achieve the information recording method of (11) described above.

Further, (13) an information recording method as described in (4) according to which the power level immediately after the header pulse is not smaller than 70 % and not larger than 140 % of the intermediate power level. This information recording method is suitable for high-density recording because the width of the front part of the recording mark and the width of the rear part of the recording mark can be controlled independently. Further, it is also possible to achieve a satisfactory recording when the power level immediately after the header pulse is not larger than 70 % or not smaller than 140 % of the intermediate power level. However, particularly a large effect can be obtained in the improvement in the quality of the signal when preferably the power level immediately after the header pulse is not smaller than 100 % and not larger than 120 % of the intermediate power level.

Further, according to another aspect of the present invention, there is provided (14) an information recording apparatus as described in (8) above and having a recording waveform generator according to which the power level immediately after the header pulse is not smaller than 70 % and not larger than 140 % of the intermediate power level. When this information recording apparatus is used, it is possible to achieve the information recording method of (13) described above.

According to another aspect of the present invention, there is provided (15) an information recording method as described in (1) to (4), (9), (11) and (13) above, wherein information is recorded both on a land and within a groove on the information recording medium. This information recording method enables an accurate recording of information without erasing information on adjacent tracks even in the case where information is recorded on an information recording medium of a narrow track pitch which is not larger than an energy beam for recording, particularly an information recording medium corresponding to land and groove recording. Further, the cooling speed of the recording film on a land is usually different from the cooling speed of the recording film on a groove. Therefore, the width of the above-described downward directed pulse of the continuous high-power pulse may be different between the case where information is recorded on the land and the case where information is recorded on the groove.

According to another aspect of the present invention, there is provided (16) an information recording apparatus as described in (5) to (8), (10), (12) and (14) above wherein the information recording apparatus has a tracking servo for recording information both on a land and within a groove on the information recording medium. By using this information recording apparatus, the information recording method of (15) described above can be realized.

Further, in the case of recording a shortest mark by using a plurality of high-power pulses, particularly a lower jitter value can be obtained when the energy of the energy beam applied to both the header high-power pulse and the end tail high-power pulse is larger than the energy applied to other than the header and end tail high-power pulses. This effect is obtained remarkably in the case of a high-speed recording such as the disk linear velocity of 9 m/s, or in the case of a high-density recording such as when the length of the shortest mark is not larger than two thirds of the diameter of the laser beam.

As described above in detail, the basic technical idea of the present invention is to control with high precision the cooling speed of the recording film after the irradiation of the energy beam. Accordingly, the information recording methods and the information recording apparatuses shown in (1) to (16) above have particularly a large effect for an information recording medium in which information is recorded by utilizing a change of phase between crystal and amorphous (the so-called phase-change recording medium). In other words, the shape of the recording mark recorded on the phase-change recording medium is extremely sensitively determined by the cooling speed of the recording film after the irradiation of the energy beam.

The above-described width of pulse, such as the width of the high-power pulse or the width of the downward directed pulse after the continuous high-power pulse trains, shows a time between a minimum value and a maximum value of differential values of time change of the energy of the energy beam irradiated on to the information recording medium. More precisely, this shows a time between a minimum value and a maximum value of a time differential signal of a higher-order electrical signal (such as a digitalized electrical signal for generating a recording waveform). When the time between the minimum value and the maximum value is quantized, the quantized width is called the above-described pulse width. Further, even when there is a fine fluctuation in the time between the minimum value and the maximum value of the time change of the energy of the energy beam irradiated on to the information recording medium, the above-described effect is not lost if the fine fluctuation is determined to have been quantized.

It is needless to mention that the time as described in the present invention is not an absolute time but a time relative to the highest-order clock (channel clock: a clock corresponding to the basic clock of the electric signal immediately after passing a modulator such as an EFM modulator or an eight-sixteen modulator). Accordingly, when the channel clock has changed according to the relative speed of the energy beam and the information recording medium, the width of the pulse should be defined by taking the relative relation with the changed channel clock into consideration.

The above-described power level refers to an average energy level within each pulse (within the above-described time between the minimum value and the maximum value). When the power level corresponds to a voltage level of a higher-order electric signal (a digitalized electric signal for generating a recording waveform), the average energy level which is obtained by taking the relative relation into consideration is more accurate.

The changing of the width of the high-power pulse according to the relative speed of the energy beam and the information recording medium is desirable since this enables to control at a suitable value the cooling speed of the recording film of the information recording medium (such as, for example, the width of the high-power pulse is made smaller at a low linear velocity). However, this changing also has a problem that the circuit scale of the recording waveform generator becomes larger. On the other hand, when the width of the high-power pulse is not changed even when the relative speed of the energy beam and the information recording medium has changed, there is an advantage that the circuit scale of the recording waveform generator is kept small. In this case, the width of the downward directed pulse after the continuous high-power pulse trains is changed.

Further, in order to improve the recording sensitivity which is one of the objects of the present invention, a recording is carried out by using at least a recording waveform having an excess energy distributed to the header portion and the end tail portion of the series of continuous high-power pulse trains for recording a longest mark. More specifically, according to another aspect of the present invention, the following information recording method is used: (17) an information recording method for carrying out a recording of information by forming recording marks of a plurality of lengths by irradiating an energy beam to an information recording medium by modulating power of the energy beam at least at a high power level and at an intermediate power level lower than the high power level, wherein at least a longest mark is recorded by using continuous high power trains and, among a series of continuous high-power pulse trains, a power level immediately after a header high-power pulse and a power level immediately before an end tail high-power pulse are higher than power levels between the rest of high-power pulses.

Further, according to another aspect of the present invention, one of the following information recording methods may be used: (18) an information recording method as described in (17) above, wherein, among the series of continuous high-power pulse trains, a power level immediately after a header high-power pulse and a power level immediately before an end tail high-power pulse are higher than power levels between high-power pulses other than the header and end tail high-power pulses and are not higher than 200 % of the intermediate power level; and (19) an information recording method as described in (18) described above, wherein, a shortest mark is recorded by two power pulses, a second shortest mark is recorded by three high-power pulses, a third shortest mark is recorded by four high-power pulses, and a power level between first and second high-power pulses at the time of recording a shortest mark, a power level between first and second high-power pulses at the time of recording a second shortest mark, a power level between first and second high-power pulses at the time of recording a third shortest mark and a power level between third and fourth high-power pulses are not lower than 50 % and not higher than 170 % of the intermediate power level. Further, (20) an information recording method as described in (19) above, wherein, a power level between second and third high-power pulses at the time of recording a second shortest mark and a power level between second and third high-power pulses at the time of recording a third shortest mark are not higher than 50 % of the intermediate power level.

As explained above, particularly a large effect of the improvement in the quality of the signal is obtained when, among the series of continuous high-power pulse trains, the power level immediately after the header high-power pulse and the power level immediately before the end tail high-power pulse are set at a level higher than the power level between high-power pulses other than the header and end tail high-power pulses and not higher than 200 % of the intermediate power level, and preferably, at a level not lower than 50 % and not higher than 170 % of the intermediate power level.

Further, among the series of continuous high-power pulse trains, when the power level immediately after the header high-power pulse and the power level immediately before the end tail high-power pulse may be different values, and even if they are of the same values, the effect of the present invention is not lost. Accordingly, at least the power level immediately after the header high-power pulse and the power level immediately before the end tail high-power pulse (for example, a logical value within the recording waveform generating circuit) may be set equal. In this case, since the recording waveform generating circuit can be simplified, this circuit simplification is advantageous for designing the circuit. Particularly, among the series of continuous high-power pulse trains, when the power level immediately after the header high-power pulse and the power level immediately before the end tail high-power pulse are set at the same level as the intermediate power level between the series of continuous high-power pulse trains, the recording waveform generating circuit can be simplified most. When a downward directed pulse (cooling pulse) of which power is lower than the intermediate power level is provided after the series of continuous high-power pulse trains, the power level of the cooling pulse and the power level between the high-power pulses other than the header and end tail high-power pulses are set equal. This is desirable because the circuit scale of the recording waveform generating circuit can be made more simplified. In this case, there are three kinds of set values of power level, that is, the power level of the high-power pulses, the intermediate power level between the series of continuous high-power pulse trains, and the power level lower than the intermediate power level. In this case, the recording waveform generating circuit can be made extremely simple.

When a mark of a certain height is to be recorded by three high-power pulses, for example, when the power level immediately after the header high-power pulse and the power level immediately before the end tail high-power pulse are set at the same level as the intermediate power level, all the power levels between the three high-power pulses become the intermediate power level. In this case, the heat generated by the first or second high-power pulse becomes an excess heat flow and this flows to the rear end portion of the mark so that the width of the rear end portion of the mark is made larger than is necessary. In this case, it is better to arrange such that only one of the power level immediately after the header (first) high-power pulse and the power level immediately before the end tail (third) high-power pulse, is exceptionally set at a power level lower than the intermediate power level. Particularly, it is more desirable to set the power level immediately before the end tail (third) high-power pulse at a lever lower than the intermediate power level, because this arrangement enables the attenuation of the excess heat flow generated by the first or second high-power pulse.

Although the case of recording a mark of a certain length by using three high-power pulses has been described in the above explanation, the present invention can also be applied to the case of recording a mark by using two or four high-power pulses. In other words, in the case of recording a mark of a certain length by using two high-power pulses, the power level immediately after the header pulse and the power level immediately before the end tail pulse are set at the same level, and so long as this power level is concerned when this level is lower than the intermediate power level, there is a case when a satisfactory mark is formed. Further, in the case of recording by using four high-power pulses, when the power level immediately after the first high-power pulse and the power level immediately before the fourth high-power pulse are set at the same level as the intermediate power level, the excess heat flow generated by the first or second high-power pulse can be attenuated if the power level between the second high-power pulse and the power level of the third high-power pulse is set at the same level not higher than the intermediate power level. Therefore, it seldom occurs that the width of the rear end portion of the recording mark is taken larger than is necessary at the time of irradiating the fourth high-power pulse. However, depending on the structure of the information recording medium, there is a case where the width of the rear end portion of the recording mark is made larger than is necessary. In this case, it is also possible to control the width of the rear end portion of the recording mark at a suitable size when one of the power level immediately after the first high-power pulse and the power level immediately before the fourth high-power pulse is set at a power level not higher than the intermediate power level.

Further, in order to improve the recording sensitivity, in addition to the above-described methods, at least a method is considered where the width of the header and end tail high-power pulses of the continuous high-power pulse trains used for recording a longest mark is made larger. In this case, when a shortest mark or a second or third shortest mark is recorded, the width between the header high-power pulse and the end tail high-power pulse becomes smaller and there arises an excess quantity of irradiation energy per unit area as compared with the case of forming a relatively long mark such as a longest mark. As a result, a relatively short mark tends to have a larger length than a normal length. In order to solve this problem, according to another aspect of the present invention, one of the following information recording methods may be used:

(21) an information recording method for carrying out a recording of information by forming recording marks of a plurality of lengths by irradiating an energy beam to an information recording medium by modulating power of the energy beam at least at a high power level and at an intermediate power level lower than the high power level, wherein at least a power level of a high-power pulse for recording a shortest mark is lower than a power level of a high-power pulse for recording a longest mark; and (22) information recording method as described in (21) above wherein, at least, among high-power pulses for recording a shortest mark, a power level of a high-power pulse of a lowest power level is lower than any one of power levels of high-power pulses for recording a longest mark, and is not lower than 75 % of power level of a high-power pulse of a lowest power level among power levels of high-power pulses for recording a longest mark.

As explained above, it becomes possible to reduce the excess quantity of heat generated at the time of recording the shortest mark and the length of the shortest mark can be set at a normal length, when at least the power level of the high-power pulse for recording the shortest mark is lower than the power level of the high-power pulse for recording the longest mark. It is more desirable when the high power level for recording the second or third shortest mark is made lower than the high power level for recording the longest mark, because by this arrangement, the excess quantity of heat generated at the time of recording the second or third shortest mark can be reduced and the length of the second and third shortest mark can be set at a normal length. Further, in this case, when the high-power pulse level is increased along with the increase in the length of the mark to be recorded, the quantity of the irradiation energy per unit area at the time of recording all the recording marks can be averaged so that all the recording marks can have a normal length. Accordingly, this arrangement is much more suitable for achieving a high-density recording.

For recording the shortest mark, the quality of a reproduced signal is improved when the high power level for recording the shortest mark is not lower than approximately 75 % of the high power level for recording the longest mark. This effect is obtained when the high power level for recording the shortest mark is set lower than the high power level for recording the longest mark. Particularly a large effect is obtained when the high power level for recording the shortest mark is not lower than 85 % and not higher than 95 % of the high power level for recording the longest mark. When the high power level for recording the shortest mark is lower than 75 % of the high power level for recording the longest mark, the effect of the present invention can not be obtained.

As described above, it is possible to carry out a satisfactory recording with improved recording sensitivity when a recording waveform is used according to which the widths of the header and end tail high-power pulses of the series of continuous high-power pulse trains is set larger than the widths of high power pulses other than the header and end tail high-power pulses and at least the power level of the high-power pulse of the shortest mark is set lower than the power level of the longest mark.

According to another aspect of the present invention, there is provided (23) an information recording apparatus for carrying out a recording of information by forming recording marks of a plurality of lengths by irradiating an energy beam to an information recording medium by modulating power of the energy beam at least at a high power level and at an intermediate power level lower than the high power level, wherein the information recording apparatus has a recording waveform generator for generating at least one recording waveform among recording waveforms according to the information recording methods described in (17) to (22) above. When the above-described information recording apparatus is used, it becomes possible to carry out an accurate recording without lowering the recording density when the relative speed of the information recording medium and the energy beam for recording is increased or when a recording is carried out in the information recording medium of a structure which is easily cooled suddenly.

BRIEF DESCRIPTION OF THE DRAWINGS

Fig. 1 is an explanatory diagram for showing an example of the recording waveforms according to one embodiment of the present invention.

Fig. 2 is an explanatory diagram for showing another example of the recording waveforms according to one embodiment of the present invention.

Fig. 3 is an explanatory diagram for showing another example of the recording waveforms according to one embodiment of the present invention.

Fig. 4 is an explanatory diagram for showing another example of the recording waveforms according to one embodiment of the present invention.

Fig. 5 is a diagram for showing a relationship between the disk linear velocity and the jitter in one embodiment of the present invention.

Figs. 6A and 6B are structural diagrams of the information recording medium according to one embodiment of the present invention.

Fig. 7 is a diagram for showing a relationship between the width of the cooling pulse and the jitter in one embodiment of the present invention.

Fig. 8 is a block diagram for showing the information recording apparatus according to one embodiment of the present invention.

Fig. 9 is a functional block diagram of the recording waveform generating circuit used in the embodiment of the present invention.

Fig. 10 is a functional block diagram of the laser driving circuit used in the embodiment of the present invention.

Fig. 11 is a time chart for showing the operation state of the recording waveform generating circuit and the laser driving circuit used in the embodiment of the present invention.

Fig. 12 is a current-optical output characteristic diagram of the semiconductor laser used in the embodiment of the present invention.

Fig. 13 is a block diagram for showing the information recording apparatus according to one embodiment of the present invention.

Fig. 14 is an explanatory diagram for showing another example of the recording waveforms according to one embodiment of the present invention.

Fig. 15 is an explanatory diagram for showing another example of the recording waveforms according to one embodiment of the present invention.

Fig. 16 is an explanatory diagram for showing another example of the recording waveforms according to one embodiment of the present invention.

Fig. 17 is a diagram for showing a relationship between the intermediate power level Pm2 and the jitter in one embodiment of the present invention.

Fig. 18 is a diagram for showing a relationship between the high power level Ph and the intermediate power level Pm2 in one embodiment of the present invention.

Fig. 19 is a functional block diagram of the laser driving circuit used in the embodiment of the present invention.

Fig. 20 is a time chart for showing the state of operation of the recording waveform generating circuit and the laser driving circuit used in the embodiment of the present invention.

Fig. 21 is an explanatory diagram for showing another example of the recording waveforms according to one embodiment of the present invention.

Fig. 22 is a diagram for showing a relationship between the jitter values and the high power level Ph1 in one embodiment of the present invention.

DESCRIPTION OF THE PREFERRED EMBODIMENTS

The present invention will be explained in detail with reference to the following embodiments.

Embodiment 1

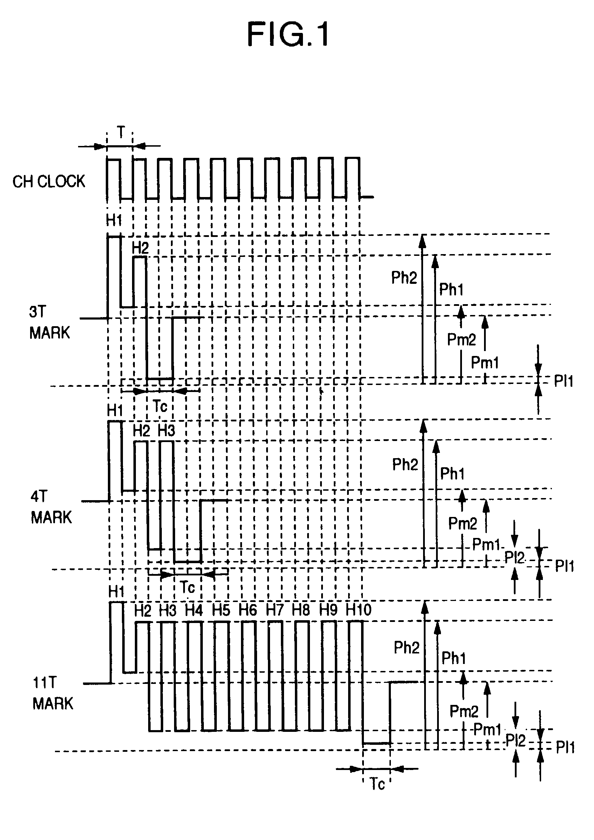

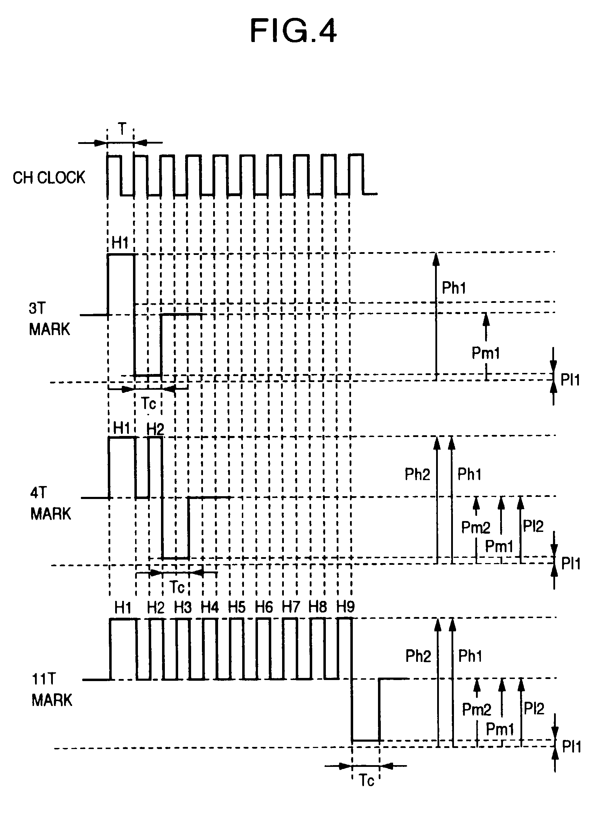

Figs. 1 to 4 are explanatory diagrams for showing recording waveforms according to one embodiment of the present invention. In these drawings, Ph1 and Ph2 denote high power levels at which a recording can be carried out, Pm1 and Pm2 denote intermediate power levels, and P11 and P12 denote lower-power levels. T denotes a width of a channel clock, and a recording is carried out by setting a divided width of a recording pulse at T/2 with almost an equal interval (the width of a high-power pulse is almost T/2 in Figs. 1 to 3, and only the width of the header pulse is T in Fig. 4 for carrying out a recording). Of course, it is not necessary to fix the size of the division of the recording pulse at T/2. The effect of the present invention has been confirmed when the width of the division is set at an integer times of one to the n-th (where an n is an integer) of the channel clock width, such as T/3 or T/4. However, when the width of the high-power pulse or the width of the cooling pulse (the downward directed pulse added after a series of continuous high-power pulse trains is called the cooling pulse) is set at an integer times one second times of the channel clock T, the circuit scale of the recording waveform generating circuit can be made smallest, which is desirable. When the number of division of the channel clock number is increased such as when the width is set at an integer times one third of the channel clock T or an integer times a quarter of the channel clock T, this division is desirable in that the width can be optimized with higher precision. However, this is not desirable in that the circuit scale becomes larger.

The recording waveform shown in Fig. 1 is characterized in that there is a case where the power level Ph2 of the header pulse H1 is different from the level Ph1 of the high-power pulse other than the header pulse and that there is a case where the level Pm2 after the header pulse H1 is different from the intermediate power level Pm1 at which information can be erased. Further, there is also a case where a power level P12 of a downward directed pulse between the high-power pulses is different from a power level P11 of the cooling pulse.

However, it is conditional that the levels of Ph1 and Ph2 are the levels at which information can be recorded and Pm1 is the level at which information can be erased. The intermediate power level Pm2 is effective both when this is not lower than Pm1 and when this is not higher than Pm1. It is particularly desirable when Pm1 is the same as Pm2 because the recording waveform generating circuit can be simplified in this case. When Ph2 is larger than Ph1, the effect of the present invention is obtained particularly when Pm2 is lower than Pm1. When Pm2 is not smaller than Pm1, there is a case where the effect of the present invention is obtained even if Ph2 is lower than Ph1. It is a condition of the present invention that P11 is lower than Pm1 when a recording waveform having a cooling pulse is used. However, there is an effect of the present invention when P12 is lower than Ph1 or Ph2.

The power level of each pulse of the recording waveform is classified into a few kinds for the sake of convenience, as shown above. However, from the characteristics of an electric signal, the pulse of each level may overshoot or undershoot, and if the pulses are of the same level within this range, the above-described effect is not lost. For example, the levels of the second high-power pulse H2 and the end tail pulse, or the level of the downward directed pulse among high-power pulses after H2 may be different from other equivalent levels. However, the above-described effect is not lost in this case.

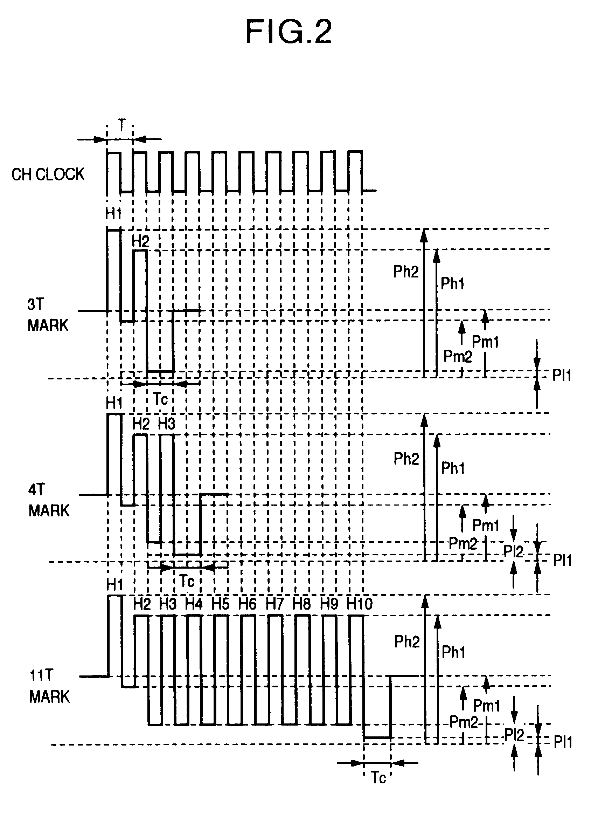

Of the recording waveforms shown above, the recording waveforms that have particularly a large effect are shown in Figs. 2 to 4.

Characteristics of the recording waveforms shown in Fig. 2 are as follows.

$$Ph2 \geq Ph1$$
$$Ph1 > Pm1$$
$$Pm1 \geq Pm2$$

Pm1 > P11

Ph1 > P12

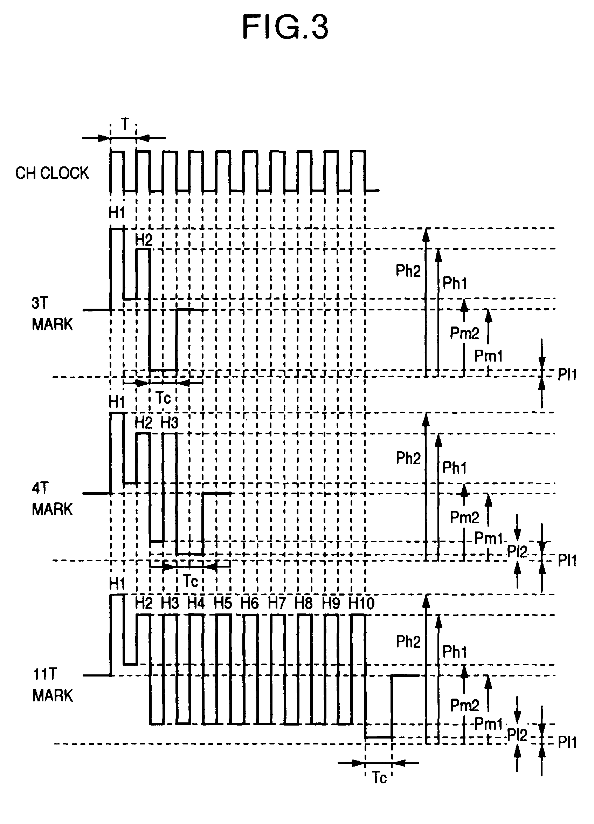

Characteristics of the recording waveforms shown in Fig. 3 are as follows.

Ph1 > Pm1

Ph2 > Pm1

Pm2 ≥ Pm1

Pm1 > P11

Pm1 > P12

Characteristics of the recording waveforms shown in Fig. 4 are as follows.

Ph1 > Pm1

Ph2 > Pm1

Ph1 ≥ Pm2

Ph2 > Pm2

Ph1 > P12

Ph2 > P12

P12 > P11

T is changed along with the disk linear velocity such that when the disk linear velocity is 6 m/s T is 36.7 ns, when the disk linear velocity is 9 m/s T is 24.4 ns, and when the disk linear velocity is 12 m/s T is set at 18.3 ns. Of course, there is a case where T changes depending on the transfer rate of the information recording apparatus or the recording density of the information recording medium.

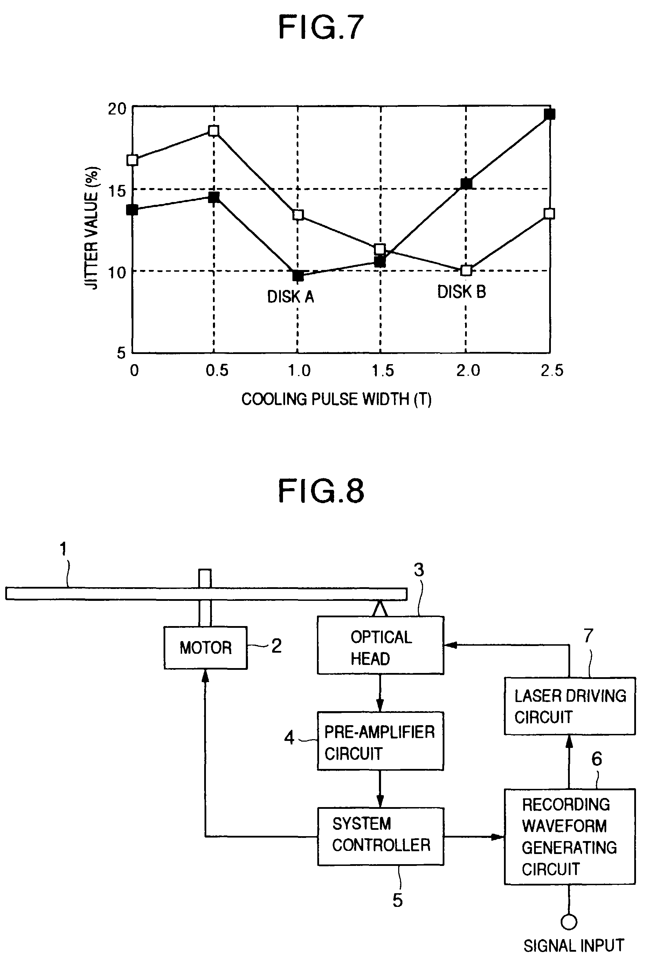

Fig. 8 shows a block diagram of the information recording apparatus according to the present invention. When an information recording medium 1 is mounted, the information recording medium 1 is rotated by a motor 2 at a constant disk linear velocity of 6 m/s. In a read-in area provided in the innermost periphery of the information recording medium 1, there is a pit in which information relating to a recordable disk linear velocity area is stored in advance. The information relating to the recordable disk linear velocity area that has been read by an optical head 3 is transferred to a system controller 5 through a pre-amplifier circuit 4. At the same time, information relating to a recording waveform and an optimum recording power is similarly transferred to the system controller 5. The system controller 5 controls the motor 2 based on the information relating to the recordable disk linear velocity area and radius position information of the optical head 3, so that the information recording medium 1 is rotated at a suitable rotation number.

In a recording waveform generating circuit 6, recording waveforms are programmed in advance within the circuit so that a recording waveform is generated when the width of the cooling pulse is any one of 0 T, 0.5 T, 1.0 T, 1.5 T, 2.0 T and 2.5 T. The recording waveform generating circuit 6 can generate a recording waveform of a cooling pulse width which is suitable for the information recording medium 1 by recording waveform information transferred through the system controller 5. Based on a recording waveform transferred from the recording waveform generating circuit 6, a laser driving circuit 7 makes a semiconductor laser located within the optical head 3 emit a laser so that a recording mark is recorded on to the information recording medium 1.

At first, by using the waveforms shown in Fig. 2, an EFM (Eight to Fourteen Modulation) signal is recorded on to a phase-change recording medium having an Ag-Ge-Sb-Te series recording film by changing a disk linear velocity. In this case, a laser beam having a waveform of 680 nm is used as an energy beam. An objective lens for focusing the laser beam on to the phase-change recording medium has a numerical aperture of 0.55 and the laser beam diameter is set to about 1.2 μm. The recording power is changed according to an increase in the disk linear velocity, and each power level is set to the following level when the disk linear velocity is 6 m/s.

Ph1 : 11 mW

Ph2 : 12.5 mW

Pm1 : 4.0 mW

Pm2 : 1.1 mW

P11 : 0.5 mW

P12 : 1.2 mW

Further, a cooling pulse is provided at the end tail of continuous high-power pulse trains, H1 to H10 in Fig. 2, for example, and jitter values are compared for the case where a width Tc of the cooling pulse is changed between 0 and 2.5 T with an T/2 interval.

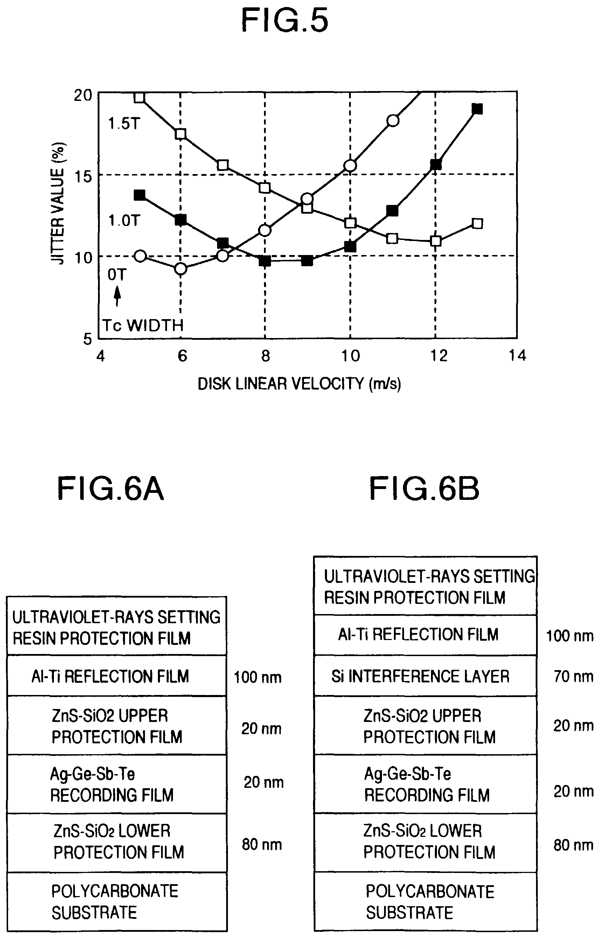

Fig. 5 shows a linear velocity dependency of jitter values by using Tc as a parameter. When Tc is 0 T, the jitter value becomes a minimum when the disk linear velocity is approximately 6 m/s. The jitter value increases by a large extent when the disk linear velocity is not smaller than 8 m/s. However, when Tc is set at 1.5 T, the jitter value is able to be set to a minimum when the disk linear velocity is approximately 12 m/s. As explained above, when the cooling pulse width Tc is increased along with the increase in the disk linear velocity, a satisfactory reproduced signal can be obtained when the disk linear velocity has changed to a high speed as well.

Embodiment 2

Figs. 6A and 6B show structures of phase-change recording mediums having different cooling speeds which are used in the present embodiment. A disk A shown in Fig. 6A is a phase-change recording medium having a rapid cooling structure according to which a ZnS-SiO$_2$ upper protecting layer between an Ag-Ge-Sb-Te recording film and an Al-Ti reflecting film is thin, and a disk B shown in Fig. 6B is a phase-change recording medium having a gradual cooling structure according to which a Zi interfering layer is laminated between an Al-Ti reflecting film and a ZnS-SiO$_2$ upper protecting film.

An EFM signal is recorded on each disk by using a recording apparatus similar to that used in Embodiment 1 and by using the waveform shown in Fig. 3. In this case, the disk linear velocity is set to 9 m/s. Each power level for disk A is set as follows.

Ph1 : 11.0 mW
Ph2 : 11.5 mW
Pm1 : 4.0 mW
Pm2 : 4.1 mW
P11 : 0.5 mW
P12 : 1.2 mW.

Each power level for disk B is set as follows.

Ph1 : 10.5 mW
Ph2 : 10.0 mW
Pm1 : 4.0 mW
Pm2 : 4.5 mW
P11 : 0.5 mW
P12 : 1.2 mW.

Further, for each disk, jitter values are measured for the case where the width Tc of the cooling pulse is changed between 0 and 2.5 T with an T/2 interval.

Fig. 7 shows the Tc dependency of a jitter value for each disk. In the case of the disk A of the rapid cooling structure, the jitter value becomes a minimum when Tc is 1.0 T, and in the case of the disk B of the gradual cooling structure, the jitter value becomes a minimum when Tc is 2.0 T. As described above, when a cooling pulse of the width corresponding to the cooling speed of the information recording medium is added to the end tail of the high-power pulse width, information of a satisfactory signal quality can be recorded on various information recording mediums having different cooling speeds.

Embodiment 3

Fig. 8 shows a block diagram of the information recording apparatus according to the present invention. When an information recording medium 1 is mounted, the information recording medium 1 is rotated by a motor 2 at a constant disk linear velocity of 6 m/s. In a read-in area provided in the innermost periphery of the information recording medium 1, there is a pit in which information relating to a recordable disk linear velocity area is stored in advance. The information relating to the recordable disk linear velocity area that has been read by an optical head 3 is transferred to a system controller 5 through a pre-amplifier circuit 4. At the same time, information relating to a recording waveform and an optimum recording power is similarly transferred to the system controller 5. The system controller 5 controls the motor 2 based on the information relating to the recordable disk linear velocity area and radius position information of the optical head 3, so that the information recording medium 1 is rotated at a suitable rotation number.

In a recording waveform generating circuit 6, recording waveforms are programmed in advance within the circuit so that a recording waveform is generated when the width of the cooling pulse is any one of 0 T, 0.5 T, 1.0 T, 1.5 T, 2.0 T and 2.5 T. The recording waveform generating circuit 6 can generate a recording waveform of a cooling pulse width which is suitable for the information recording medium 1 by recording waveform information transferred through the system controller 5. Based on a recording waveform transferred from the recording waveform generating circuit 6, a laser driving circuit 7 makes a semiconductor laser located within the optical head 3 emit a laser so that a recording mark is recorded on to the information recording medium 1. When recording waveform information is not obtained or when the information recorded by using a recording waveform of a cooling pulse width determined based on the recording waveform information can not be reproduced normally, a test writing is carried out in a test writing area on the information recording medium 1. For example, when the waveform shown in Fig. 4 is used, a recording is carried out by using the high power level Ph1, the intermediate power level Pm1 and the cooling pulse width Tc as test writing parameters, and the waveform of the smallest jitter is used as an optimum recording waveform. In this case, in order to simplify the optimization processing, a recording waveform is generated by assuming $Ph1 = Ph2$, and $Pm1 = Pm2 = Pm12$. An optimum recording waveform is determined in this way, and information is recorded on the disks A and B shown in Fig. 6 and on a commercially available optical magnetic disk. As a result, a satisfactory reproduced signal of a jitter value not larger than 15 % can be obtained from all of these disks. The jitter values of the signals reproduced from the disk A, the disk B and the commercially available optical magnetic disk are 11 %, 8 % and 12 % respectively.

In this case, each power level and the cooling pulse width Tc for each disk are as follows.

For the disk A,

Ph1 : 10.5 mW
Ph2 : 10.5 mW
Pm1 : 4.0 mW
Pm2 : 4.0 mW
P11 : 0.5 mW
P12 : 4.0 mW.
Tc : 0.0 T

For the disk B,

Ph1 : 9.5 mW
Ph2 : 9.5 mW
Pm1 : 3.5 mW
Pm2 : 3.5 mW
P11 : 0.5 mW
P12 : 3.5 mW.
Tc : 1.0 T

For the commercially available optical magnetic disk,

Ph1 : 10.0 mW
Ph2 : 10.0 mW
Pm1 : 4.0 mW
Pm2 : 4.0 mW
P11 : 1.2 mW
P12 : 4.0 mW.
Tc :

For the waveform of Fig. 2, optimization and recording are carried out in a similar manner to that for the waveform shown in Fig. 4. As a result, jitter values of the signals reproduced from the disk A, the disk B and the commercially available optical magnetic disk are 8 %, 6 % and 10 % respectively. Also, for the waveform of Fig. 3, optimization is carried out in a similar manner, and jitter values of the signals reproduced from the disk A, the disk B and the commercially available optical magnetic disk are 9 %, 7 % and 10 % respectively.

For comparing with the conventional method, a recording is carried out by assuming Tc = 0 T and without changing the Tc width of the waveform of Fig. 4. In this case, a normal recording can be done on the disk A, but a normal recording can not be done on the disk B and the commercially available optical magnetic disk, with the jitter values 16 % and 18 % respectively. Thus, it is not possible to obtain a reproduced signal same as the input signal, from these disks. As a result, it has been made clear that a normal recording and reproduction can be achieved without depending on the cooling speed of the medium structure, by adding a recording waveform generator which can change the Tc width, to the information recording and reproducing apparatus.

Further, a similar experiment is carried out by using the above-described apparatus with the disk linear velocity set at 9 m/s. When a recording is carried out by assuming Tc = 0 T without changing the width of the waveform of Fig. 4, jitter values of all the disks are not lower than 15 %, so that a normal recording can not be done in this case. When the recording waveform is optimized by setting the Tc width as variable, a normal recording can be done on all the disks. Jitter values of the signals reproduced from the disk A, the disk B and the commercially available optical magnetic disk are 9 %, 10 % and 12 % respectively. As a result, it has been made clear that a normal recording and reproduction can be achieved without depending on the disk linear velocity, by adding a recording waveform generator which can change the Tc width, to the information recording and reproducing apparatus.

The main operation of the information recording apparatus used in the above-described embodiments (the block structure is already explained in Fig. 8) will be explained below with reference to Fig. 8 and Figs. 9 to 11.

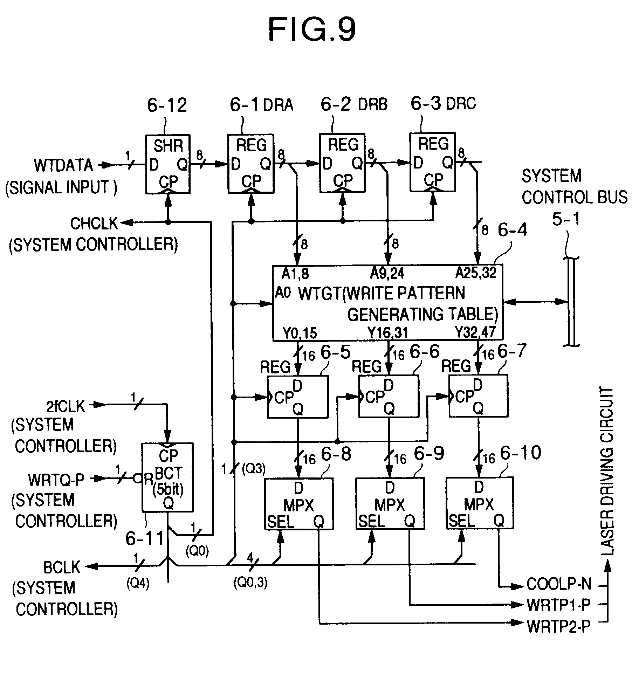

Fig. 9 is a diagram for showing the structure of the recording waveform generating circuit (block 6 in Fig. 8) in functional blocks. The recording waveform generating circuit is structured by an eight-bit shift register 6-12, eight-bit data registers 6-1, 6-2, and 6-3, a write (record) pattern generating table 6-14, sixteen-bit data registers 6-5, 6-6 and 6-7, sixteen-input one-output data multiplexers 6-8, 6-9 and 6-10, and a five-bit binary counter 6-11. A two-times channel clock 2fCLK sent from the system controller (block 5 in Fig. 8) drives the counter 6-11 at the moment when a write command signal WRTQ-P sent from the system controller has become true (high level), and supplies a lowest-order bit Q0 of the counter 6-11 as a channel clock signal of the shift register 6-12 and at the same time inversely transmits the signal to the system controller. An output Q3 which is the fourth bit from the lowest order of the counter 6-11 is supplied to the various registers 6-1, 6-2, 6-3, 6-5, 6-6 and 6-7 and the patter generating table 6-4, as a half-byte clock signal. Outputs Q0, Q1, Q2 and Q3 which are four bits from the lowest order of the counter 6-11 are supplied to the multiplexers 6-8, 6-9 and 6-10, as data selection signals. In the above-described state, that is, when WRTQ-P is true, a serial signal input WTDATA is sequentially recorded in the shift register 6-12 and is also shifted at the timing of the CHCLK. Each time when the shift is carried out eight times (that is, each time when the Q3 output of the counter 6-11 has changed from a high level to a low level), eight-bit data stored in the register 6-12 is shifted to the first eight-bit data register (DRA) 6-1, and at the same time, data stored in the register 6-1 is shifted to the second eight-bit data register (DRB) and similarly, data stored in the register 6-2 is shifted to the third eight-bit data register (DRC). Total twenty-four bit data stored in the first register 6-1 to the third register 6-3 become an address input of the write pattern generating table 6-4 structured by a non-volatile random access memory (RAM) as a principle, and parallel data signals (one word is structured by sixteen bits) for three words by object are outputted. The first parallel data signal output word (Y0 to Y15) passes through the first sixteen-bit data register 6-5, sequentially selected by the first multiplexer 6-8 and becomes a bit serial data WRTP2-P. Similarly, the second parallel data signal output word (Y16 to Y31) passes through the second sixteen-bit data register 6-6, sequentially selected by the second multiplexer 6-9 and becomes a bit serial data WRTP1-P. Further similarly, the third parallel data signal output word (Y32 to Y47) passes through the third sixteen-bit data register 6-7, sequentially selected by the third multiplexer 6-10 and becomes a bit serial data COOLP-N. The above-described three kinds of bit serial data WRTP2-P, WRTP1-P and COOLP-N are supplied to the laser driving circuit (block 7 in Fig. 8, to be described in detail later) and various laser driving levels are generated. The contents of the write pattern generating table (RAM) 6-4 can be updated one by one by data transfer from a system control bus (abbreviated as sysconbus) 5-1 of the system controller (block 5 in Fig. 8). By this arrangement, it becomes possible to easily change the cooling pulse width TC (reference Figs. 1 to 4) and others according to the situation.

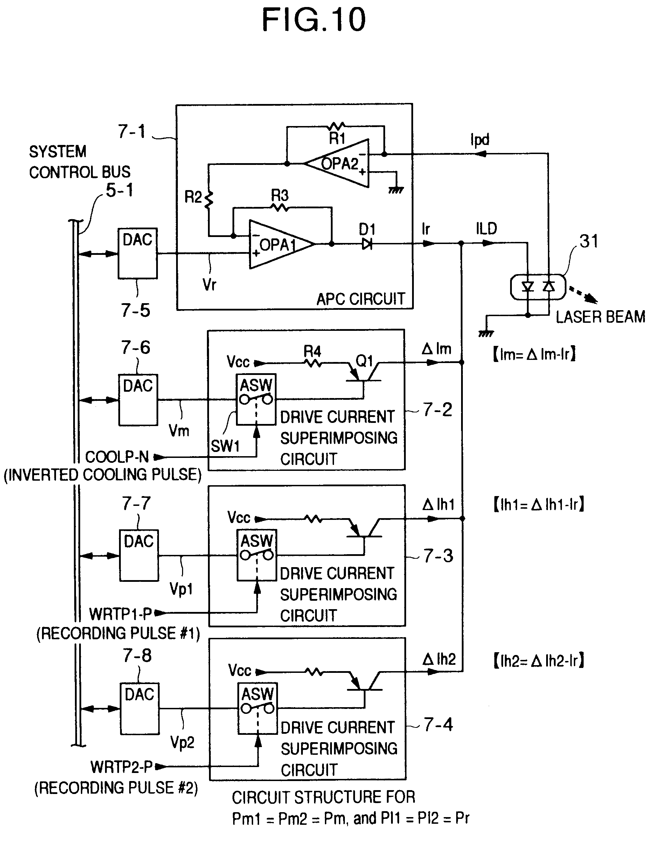

Fig. 10 shows a functional block diagram of the laser driving circuit (block 7 in Fig. 8). The laser driving circuit is structured by an APC circuit 7-1, three series of drive current superimposing circuits 7-2, 7-3 and 7-4 and four series of DA converters (DAC) 7-5, 7-6, 7-7 and 7-8. An output value Vr of the DA converter 7-5 for the APC is set by data transfer from the system control bus (abbreviated as sysconbus) 5-1 of the system controller (block 5 in Fig. 8). In the mean time, a laser beam is generated when an output current Ir is supplied to a semiconductor laser 31. When a part of the laser beam is returned to a photo-diode for a monitor, a monitor current Ipd flows. The current Ipd is converted to a voltage by the operation of a resistor R1 and an operating amplifier OPA2 (converted voltage = - Ipd × P1). The voltage is inputted to an operating amplifier OPA1 through a resistor R2, and this voltage is compared with the output voltage Vr of the DA converter 7-5. Thus, the output current Ir is controlled so that the output voltage of the OPA2 (which is proportional to the intensity of the laser beam) and the output value Vr (a target value of the laser output power) are balanced. A loop gain of the APC circuit is determined by the ratio of the resistor R2 to R3, and a diode D1 is used for preventing an inverse flow of a superimposing current (to be described later). In the mean time, when an inverted cooling pulse COOLP-N is at a high level, an analog switch (ASW) SW1 is in the closed state. Since an output voltage Vm of the DA converter 7-6 for superimposing the first current set by the data transfer from the system control bus (abbreviated as sysconbus) 5-1 of the system controller (block 5 in Fig. 8) is being applied to the base of the transistor Q1, a current $\Delta$Im for superimposing an erasing power (Pm, reference Figs. 1 to 4) expressed by the following (expression 1) is superimposed on the current Im.

$$\Delta Im = (Vcc - Vm - 0.7) \div R4 \qquad (1)$$

In this case, when the inverted cooling pulse COOLP-N is set at a low level, the analog switch (ASW) SW1 is set to an open state, so that the transistor Q1 is turned off and the superimposed current $\Delta$Im does not flow. Similarly, when a recording pulse #1 (WRTP1-P) is at a high level, a superimposed current $\Delta$Ih1 (a superimposed current for generating the first high-level power Ph1 for recording, reference Figs. 1 to 4) flows, and when a recording pulse #2 (WRTP2-P) is at a high level, a superimposed current $\Delta$Ih2 (a superimposed current for generating the second high-level power Ph2 for recording, reference Figs. 1 to 4) flows.

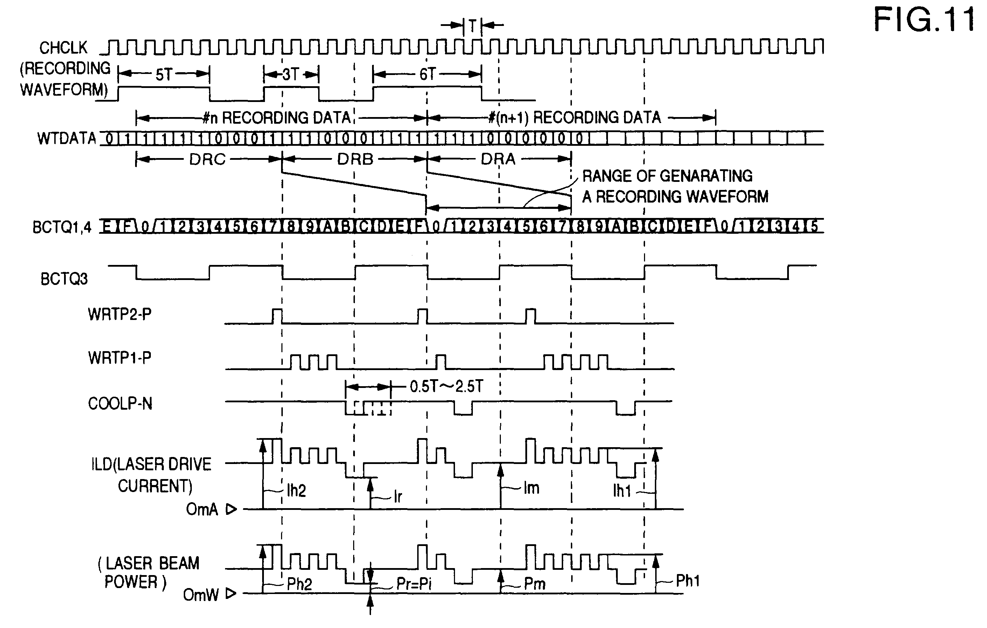

Fig. 11 is a diagram for showing the above-described operation in a time chart. The diagram shows the state that a serial signal input WTDATA for showing a recording waveform synchronous with a channel clock CHCLK is stored in the data register DRA in a unit of eight bits, the contents of the register DRA are shifted to the next register DRB, and similarly, the data of the register DRB is shifted to DRC (reference Fig. 9). At each closing edge of the half-byte clock Q3 at the fourth bit from the lowest order of the binary counter BCT (6-11 in Fig. 9), the laser drive timing signals WRTP2-P, WRTP1-P and COOLP-N are generated by corresponding to the contents of the data register DRB and by referring to the contents of the DRA which stores the data before the half-byte clock timing and the contents of the DRC which stores the data after the half-byte clock timing. When the above-described three kinds of laser drive timing signals WRTP2-P, WRTP1-P and COOLP-N are inserted into the laser driving circuit (Fig. 10), a predetermined laser drive current Id1 flows and a necessary laser beam output can be obtained.

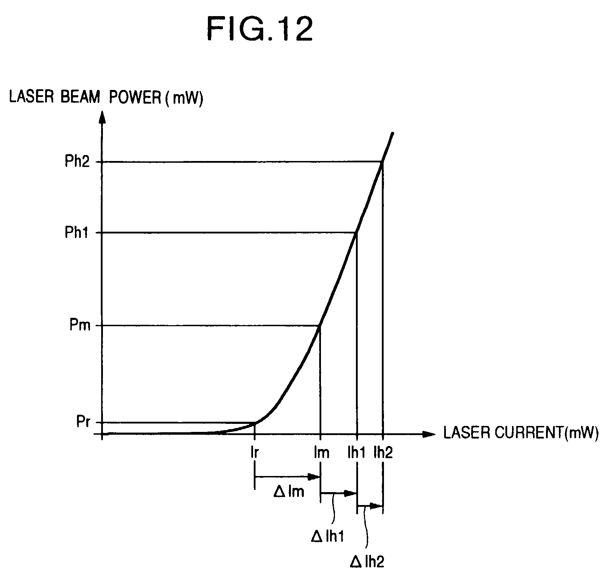

Fig. 12 shows an I-P (current versus optical output) characteristic diagram of a semiconductor laser (31 in Fig. 10) used in the embodiment of the present invention. This diagrams shows the state that when a laser current is Ir mA, a laser optical output is Pr mW, when $\Delta$Im mA is superimposed on the Ir, the laser current becomes Im mA and the optical output becomes Pm mW, and further when $\Delta$Ih1 m A is superimposed on the laser current, the laser current flows by Ih1 mA and the optical output becomes Ph1 mW, and similarly when further $\Delta$Ih2 m1A is superimposed on the laser current, the laser current flows by Ih2 mA, and as a result the optical output becomes Ph2 mW.

As explained above, since the information recording apparatus of the present invention has a recording waveform generating circuit which can change the cooling pulse width, the information recording apparatus can meet the high speed of the disk linear velocity and further can record information on information recording mediums having various cooling speeds.

Embodiment 4

Figs. 6A and 6B show structures of phase-change recording mediums having different cooling speeds which are used in the present embodiment. A disk A shown in Fig. 6A is a phase-change recording medium having a rapid cooling structure according to which a ZnS-SiO$_2$ upper protecting layer between an Ag-Ge-Sb-Te recording film and an Al-Ti reflecting film is thin, and a disk B shown in Fig. 6B is a phase-change recording medium having a gradual cooling structure according to which a Zi interfering layer is laminated between an Al-Ti reflecting film and a ZnS-SiO$_2$ upper protecting film. Further, on a polycarbonate substrate having a thickness of 0.6 mm used for these disks, a groove of 0.7 $\mu$m is spirally provided with a pitch of 1.48 $\mu$m. The depth of the groove is approximately 70 nm.

In the radius direction of each disk, twenty four zones for user's recording are available. Seventeen to forty sectors exist on the inner periphery of the zones. As a method for controlling the motor for carrying out a recording and reproduction, a ZCLV (Zone Constant Linear Velocity) system for changing the rotation number of the disk for each zone in which a recording and reproducing is carried out, is used. According to this format, the disk linear velocity is different between the inner-most periphery and the outer-most periphery of the disk. The disk linear velocities for the inner-most periphery and the outer-most periphery are 6.0 m/s and 6.35 m/s respectively.

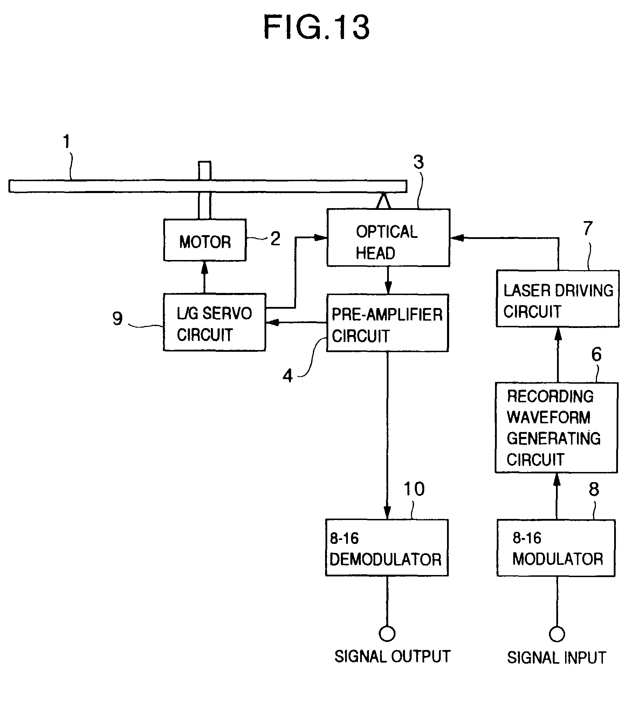

Information is recorded on each disk by using a recording apparatus shown in Fig. 13. The operation of the present recording apparatus will be explained below.

Information from the outside of the recording apparatus is transferred to an eight-sixteen modulator 8 using eight bits as one unit. When information is recorded on the disk 1, a modulation system for converting eight bits into sixteen bits, the so-called eight-sixteen modulation system, is used. According to this modulation system, information of mark lengths of 3 T to 11 T corresponding to the eight-bit information is recorded on the medium. The eight-sixteen modulator shown in the drawing carries out this modulation. In this case, T denotes a cycle of the clock at the time of recording the information, and T is set at 34.2 ns in this case.

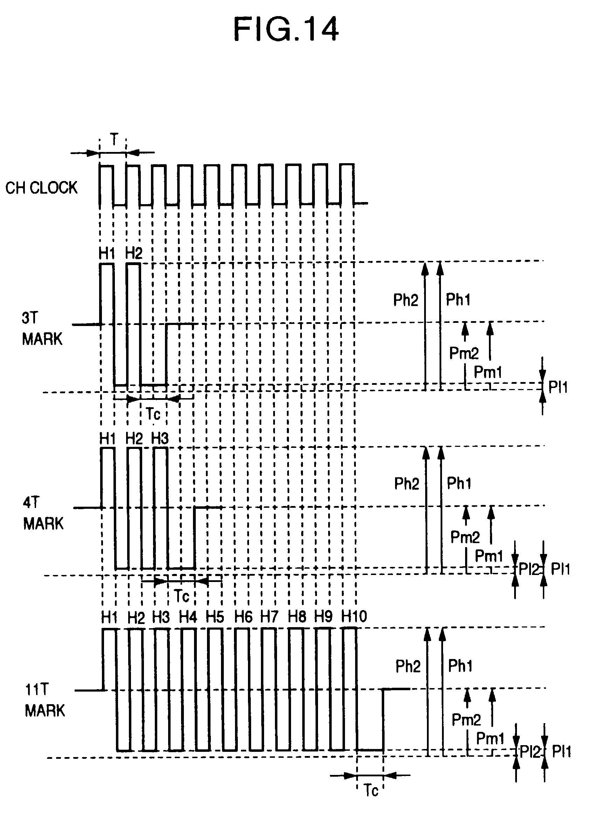

Digital signals of 3 T to 11 T converted by the eight-sixteen modulator 8 are transferred to a recording waveform generating circuit 6. Of the recording waveforms shown in Fig. 2, recording waveforms shown in Fig. 14, which enable the circuit scale of the recording waveform generating circuit to be made smaller, are generated. In this case, each power is set as follows.
For the disk A,

Ph1 : 12.0 mW
Ph2 : 12.0 mW
Pm1 : 4.5 mW
Pm2 : 0.5 mW
P11 : 0.5 mW
P12 : 0.5 mW.

For the disk B,

Ph1 : 10.0 mW
Ph2 : 10.0 mW
Pm1 : 4.0 mW
Pm2 : 0.5 mW
P11 : 0.5 mW
P12 : 0.5 mW.

The width of the high-power pulse is set at approximately T/2 and the cooling pulse width Tc is set to be able to be changed from the outside.

A recording waveform generated by the recording waveform generating circuit 6 is transferred to a laser driving circuit 7, and the laser driving circuit 7 makes a semiconductor laser located within an optical head 2 emit a laser beam based on this recording waveform.

In the optical head 2 mounted on the recording apparatus, a semiconductor laser having an optical wavelength of 650 nm for an energy beam for recording information, is used. This laser beam is focused on the recording film of the disk 1 with an objective lens which has a numerical aperture of 0.6. Information is recorded by irradiating a laser beam of the energy corresponding to the above-described recording waveform. In this case, the diameter of the laser beam is approximately 1 μm and the laser beam is polarized to apply a circularly polarized light.

The present recording apparatus corresponds to a system for recording information on both a groove and a land (an area between grooves) (the so-called land-groove recording system). In the present recording apparatus, a tracking for a land and a groove can be selected freely by an L/G servo circuit 9.

A reproduction of recorded information is also carried out by using the optical head 2. A focused laser beam which has the same size as that at the time of the recording is irradiated on the recorded mark, and the lights reflected from the mark and from portions other than the mark are detected to obtain a reproduced signal. The amplitude of the reproduced signal is amplified by a pre-amplifier circuit 4 and the amplified signal is transferred to an eight-sixteen demodulator 10. The eight-sixteen demodulator 10 converts the signal into eight-bit information at every sixteen bits. With the above operation, the reproduction of the recorded mark is completed.

In order to evaluate the signal quality of the reproduced signal, jitters of the reproduced signal are measured. In this case, recording and reproducing is carried out by changing the cooling pulse width Tc between 0 and 2.4 T with an interval of T/5. In this case, Pm1 is corresponded to Tc and is changed by a very small degree. The measured values according to the present embodiment are shown below.

| Tc | Disk A | Disk B |
|-----|--------|--------|
| 0.0 | 15.5 | 17.3 |
| 0.2 | 17.0 | 18.9 |
| 0.4 | 18.2 | 19.3 |
| 0.6 | 14.5 | 17.3 |
| 0.8 | 12.2 | 14.8 |
| 1.0 | 10.2 | 11.8 |
| 1.2 | 9.5 | 11.0 |
| 1.4 | 10.0 | 10.5 |
| 1.6 | 10.5 | 10.0 |
| 1.8 | 11.0 | 9.0 |
| 2.0 | 12.0 | 10.3 |
| 2.2 | 14.5 | 11.8 |
| 2.4 | 17.5 | 13.3 |

As shown in the above, for the disk A, the jitter value is minimum when Tc is 1.2 Tm, amd for the disk B, the jitter value is minimum when Tc is 1.8 T.

Further, when Tc is set between 0.8 T and 2.2 T, a low jitter value of not higher than 15 % is obtained for both the disk A and the disk B. When Tc is set between 1.0 T and 2.0 T, a low jitter value of not higher than 12 % is obtained for both the disk A and the disk B. Accordingly, when Tc is set between 0.8 T and 2.2 T, more preferably, between 1.0 T and 2.0 T, a low jitter value is obtained regardless of the cooling speed of the optical disk.

When Tc is set at an integer times T/2, such as 1.0 T, 1.5 T and 2.0 T, there is a large effect in making smaller the circuit scale of the recording waveform generating circuit. Particularly, when Tc is set at 1.0 T, there is an advantage that the power margin of Pm1 becomes large.

Further, when the waveform of Fig. 3 is used as the recording waveform, a jitter value not higher than 15 % is obtained for both the disk A and the disk B when Tc is set between 0.8 T and 2.2 T. Further, when Tc is set between 0.9 T and 1.9 T, a low jitter value of not higher than 10 % is obtained for both the disk A and the disk B. Accordingly, when Tc is set between 0.8 T and 2.2 T, more preferably, between 0.9 T and 1.9 T, a low jitter value is obtained regardless of the cooling speed of the optical disk.

In this case, each power for the disk A is set as follows.

Ph1 : 12.0 mW
Ph2 : 12.0 mW
Pm1 : 4.5 mW
Pm2 : 4.5 mW
P11 : 0.5 mW
P12 : 0.5 mW.

For the disk B,

Ph1 : 10.0 mW
Ph2 : 10.0 mW
Pm1 : 4.0 mW
Pm2 : 4.0 mW
P11 : 0.5 mW
P12 : 0.5 mW.

The width of the high-power pulse is set at approximately T/2 for each disk.

Embodiment 5

On the disk A shown in Fig. 6A explained in Embodiment 4, information is recorded by using the recording apparatus shown in Fig. 13.

Information from the outside of the recording apparatus is transferred to the eight-sixteen modulator 8 using eight bits as one unit. When information is recorded on the disk 1, a modulation system for converting eight bits into sixteen bits, the so-called eight-sixteen modulation system, is used. According to this modulation system, information of mark lengths of 3 T to 11 T corresponding to the eight-bit information is recorded on the medium. The eight-sixteen modulator shown in the drawing carries out this modulation. In this case, T denotes a cycle of the clock at the time of recording the information, and T is set at 34.2 ns in this case. The disk linear velocity is set at 6 m/s.

Digital signals of 3 T to 11 T converted by the eight-sixteen modulator 8 are transferred to the recording waveform generating circuit 6, and the recording waveforms shown in Fig. 1 are recorded. In this case, each power is set as follows.

Ph1 : 12.0 mW
Ph2 : 12.0 mW
Pm1 : 4.5 mW
Pm2 : variable
P11 : 0.5 mW
P12 : 0.5 mW.

The width of the high-power pulse is set at approximately T/2 for each disk, and the cooling pulse width Tc is set at 1.5 T. Pm is set to be able to be changed from the outside.

A recording waveform generated by the recording waveform generating circuit 6 is transferred to a laser driving circuit 7, and the laser driving circuit 7 makes a semiconductor laser located within the optical head 2 emit a laser beam based on this recording waveform.

In the optical head 2 mounted on the recording apparatus, a semiconductor laser having an optical wavelength of 650 nm for an energy beam for recording information, is used. This laser beam is focused on the recording film of the disk 1 with an objective lens which has a numerical aperture of 0.6. Information is recorded by irradiating a laser beam of the energy corresponding to the above-described recording waveform. In this case, the diameter of the laser beam is approximately 1 μm and the laser beam is polarized to apply a circularly polarized light.

The present recording apparatus corresponds to a system for recording information on both a groove and a land (an area between grooves) (the so-called land-groove recording system). In the present recording apparatus, a tracking for a land and a groove can be selected freely by the L/G servo circuit 9.

A reproduction of recorded information is also carried out by using the optical head 2. A focused laser beam which has the same size as that at the time of the recording is irradiated on the recorded mark, and the lights reflected from the mark and from portions other than the mark are detected to obtain a reproduced signal. The amplitude of the reproduced signal is amplified by the pre-amplifier circuit 4 and the amplified signal is transferred to the eight-sixteen demodulator 10. The eight-sixteen demodulator 10 converts the signal into eight-bit information at every sixteen bits. With the above operation, the reproduction of the recorded mark is completed.

In order to evaluate the signal quality of the reproduced signal, jitters of the reproduced signal are measured. In this case, recording is carried out by changing the intermediate power level Pm2 between 0.5 mW and 12 mW. As a result, the jitter value largely depends on Pm2 and becomes a minimum when Pm2 is 5.0 mW.

Further, when Pm2 is set between 3.0 and 6.5 mW, particularly a low jitter value is obtained. When Pm2 is set between 4.5 and 5.5 mW, a low jitter value of not higher than 10 % is obtained. Accordingly, when Pm2 is set at a level not lower than 70 % and not higher than 140 % of Pm1, more preferably, at a level not lower than 100 % and not lot higher than 120 % of Pm1, or when Pm2 is set at a level not lower than 25 % and not higher than 50 % of Ph1 or Ph2, more preferably, at a level not lower than 38 % and not lot higher than 45 % of Ph1 or Ph2, a high-quality reproduced signal of an extremely low jitter value is obtained.

Embodiment 6

On the disk B shown in Fig. 6B explained in Embodiment 4, information is recorded by using the recording apparatus shown in Fig. 13.

Information from the outside of the recording apparatus is transferred to the eight-sixteen modulator 8 using eight bits as one unit. When information is recorded on the disk 1, a modulation system for converting eight bits into sixteen bits, the so-called eight-sixteen modulation system, is used. According to this modulation system, information of mark lengths of 3 T to 11 T corresponding to the eight-bit information is recorded on the medium. The eight-sixteen modulator shown in the drawing carries out this modulation. In this case, T denotes a cycle of the clock at the time of recording the information, and T is set at 34.2 ns in this case. The disk linear velocity is set at 6 m/s.

Digital signals of 3 T to 11 T converted by the eight-sixteen modulator 8 are transferred to the recording waveform generating circuit 6, and the following recording waveforms are generated.

A recording waveform generated by the recording waveform generating circuit 6 is transferred to a laser driving circuit 7, and the laser driving circuit 7 makes a semiconductor laser located within the optical head 2 emit a laser beam based on this recording waveform.

In the optical head 2 mounted on the recording apparatus, a semiconductor laser having an optical wavelength of 650 nm for an energy beam for recording information, is used. This laser beam is focused on the recording film of the disk 1 with an objective lens which has a numerical aperture of 0.6. Information is recorded by irradiating a laser beam of the energy corresponding to the above-described recording waveform. In this case, the diameter of the laser beam is approximately 1 µm and the laser beam is polarized to apply a circularly polarized light.

The present recording apparatus corresponds to a system for recording information on both a groove and a land (an area between grooves) (the so-called land-groove recording system). In the present recording apparatus, a tracking for a land and a groove can be selected freely by the L/G servo circuit 9.

A reproduction of recorded information is also carried out by using the optical head 2. A focused laser beam which has the same size as that at the time of the recording is irradiated on the recorded mark, and the lights reflected from the mark and from portions other than the mark are detected to obtain a reproduced signal. The amplitude of the reproduced signal is amplified by the pre-amplifier circuit 4 and the amplified signal is transferred to the eight-sixteen demodulator 10. The eight-sixteen demodulator 10 converts the signal into eight-bit information at every sixteen bits. With the above operation, the reproduction of the recorded mark is completed.

In order to check the influence of cross-erase (a phenomenon that information recorded on adjacent tracks are erased at the time of recording information, and the adjacent tracks refer to grooves adjacent to a land and lands adjacent to a groove), information is recorded on a land in advance and information is then recorded on adjacent tracks while generating a track-offset, to thereby measure a jitter value of a signal reproduced from the land. At the time of recording information on the adjacent grooves, the information is recorded by using the following three kinds of recording waveforms in order to compare the superiority of the recording waveforms over the cross-erase.

A waveform A has each power shown in Fig. 14 set as follows.

Ph1 : 10.0 mW
Ph2 : 10.0 mW
Pm1 : 4.0 mW
Pm2 : 0.5 mW
P11 : 0.5 mW
P12 : 0.5 mW.

A waveform B has each power shown in Fig. 3 set as follows.

Ph1 : 10.0 mW
Ph2 : 10.0 mW
Pm1 : 4.0 mW
Pm2 : 4.0 mW
P11 : 0.5 mW
P12 : 0.5 mW.

A waveform C has each power shown in Fig. 4 set as follows.

Ph1 : 10.0 mW
Ph2 : 10.0 mW
Pm1 : 4.0 mW
Pm2 : 4.0 mW

P11 : 0.5 mW

P12 : 4.0 mW.

For the waveforms A and B, the width of the high-power pulse is set at approximately T/2, and for the waveform C, the width of the header pulse of the high-power pulse train is set at 1 T and the width of the high-power pulses other than the header pulse is set at approximately T/2. The width of the cooling pulse Tc is set at 1.0 T for each waveform.

As a result of the above-described embodiment, when information is recorded on an adjacent groove in the recording waveform of the waveform C, there comes to arise an influence to the jitter value of the reproduced signal from the land when the track offset quantity is about 0.1 μm or higher. When the track offset quantity is 0.15 μm, the jitter value increases to 15 %. On the other hand, when information is recorded on an adjacent groove in the recording waveform of the waveform A or B, there arises no influence to the adjacent tracks when the track offset quantity is generated by 0.15 μm. Accordingly, it is known that the waveform A or B is extremely suitable when a land-groove recording system is employed or when a high-density recording is carried out where a track pitch becomes not larger than the laser beam diameter.

In the above-described embodiment, a detailed explanation has been made of the case where the cooling pulse width Tc is 1.0 T. However, when the cooling pulse width is between 0 and 2.0 T, there is an effect of cross-erase reduction effect regardless of Tc. Further, when a measurement is carried by setting P12 of the waveforms A and B as variable, there is an effect when P12 is not larger than one half of Pm1, and there is a larger effect when P12 is not larger than one third of Pm1. A measurement is also carried out for the waveform C by assuming that P12 is variable. There is an effect when P12 is one third of Pm1, and there is no effect of cross-erase to the adjacent tracks at all when P12 is a quarter of Pm1 even if the track offset quantity is generated by 0.15 μm.

Embodiment 7

On the disk B shown in Fig. 4 explained in Embodiment 4, information is recorded by using the recording waveform relating to Claim 17 by using the recording apparatus explained in Embodiment 6 (Fig. 13). A detailed explanation is given below.

Information from the outside of the recording apparatus is transferred to the eight-sixteen modulator 8 using eight bits as one unit. When information is recorded on the disk 1, a modulation system for converting eight bits into sixteen bits, the so-called eight-sixteen modulation system, is used. According to this modulation system, information of mark lengths of 3 T to 11 T corresponding to the eight-bit information is recorded on the medium. The eight-sixteen modulator shown in the drawing carries out this modulation. In this case, T denotes a cycle of the clock at the time of recording the information, and T is set at 34.2 ns in this case. The disk linear velocity is set at 6 m/s.

Digital signals of 3 T to 11 T converted by the eight-sixteen modulator 8 are transferred to the recording waveform generating circuit 6, and the following recording waveforms are generated.

A recording waveform generated by the recording waveform generating circuit 6 is transferred to a laser driving circuit 7, and the laser driving circuit 7 makes a semiconductor laser located within the optical head 2 emit a laser beam based on this recording waveform.

In the optical head 2 mounted on the recording apparatus, a semiconductor laser having an optical wavelength of 650 nm for an energy beam for recording information, is used. This laser beam is focused on the recording film of the disk 1 with an objective lens which has a numerical aperture of 0.6. Information is recorded by irradiating a laser beam of the energy corresponding to the above-described recording waveform. In this case, the diameter of the laser beam is approximately 1 μm and the laser beam is polarized to apply a circularly polarized light.

The present recording apparatus corresponds to a system for recording information on both a groove and a land (an area between grooves) (the so-called land-groove recording system). In the present recording apparatus, a tracking for a land and a groove can be selected freely by the L/G servo circuit 9.

A reproduction of recorded information is also carried out by using the optical head 2. A focused laser beam which has the same size as that at the time of the recording is irradiated on the recorded mark, and the lights reflected from the mark and from portions other than the mark are detected to obtain a reproduced signal. The amplitude of the reproduced signal is amplified by the pre-amplifier circuit 4 and the amplified signal is transferred to the eight-sixteen demodulator 10. The eight-sixteen demodulator 10 converts the signal into eight-bit information at every sixteen bits. With the above operation, the reproduction of the recorded mark is completed.

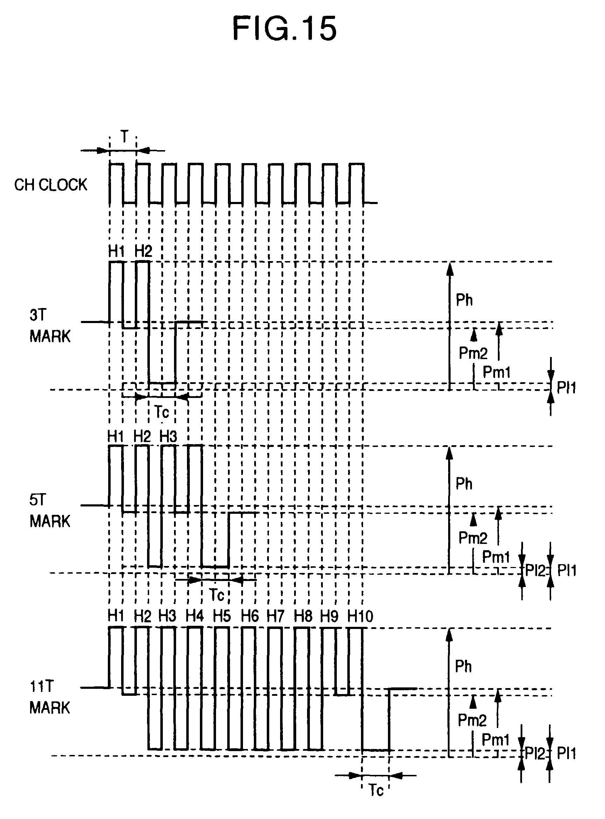

In order to evaluate the signal quality of the reproduced signal, each power level of the recording waveforms shown in Fig. 15 is set as follows, and information is recorded and jitter values of the reproduced signal are measured.

Ph : 9.0 mW

Pm1 : 4.0 mW

Pm2 : variable

P11 : 0.5 mW

P12 : 0.5 mW

The recording waveforms shown in Fig. 15 will be explained in detail below. Similar to the recording waveforms so far explained, in these recording waveforms, marks of various lengths starting from a 3 T mark which is the shortest mark to an 11 T mark which is the longest mark (there is a case where a 14 T mark is recorded for synchronization with a reproduction clock, and in this case, the longest mark is the 14 T mark) are recorded by a series of continuous high-power pulse trains of the high-power pulse level Ph. In this case, the recording of each mark is carried out by (N - 1) high-power pulse trains which is one smaller than the number of clock N to be recorded, such as the 3 T mark is recorded by two high-power pulse trains and the 4 T mark is recorded by three high-power pulse trains. Further, basically the power level Pm2 (Pm2 < Ph) which is immediately after the header high-power pulse (H1) of the recording waveform and immediately before the end tail high-power pulse (H2 to H10) is set at a higher level than the power level P12 of the high-power pulses other than the header and end tail high power levels. Further, the power level P11 of the cooling pulse is set at a level equal to the set value of P12. Further, the intermediate power level Pm1 among the series of continuous high-power pulse trains is set to have a relationship of Ph > Pm1 > P12.

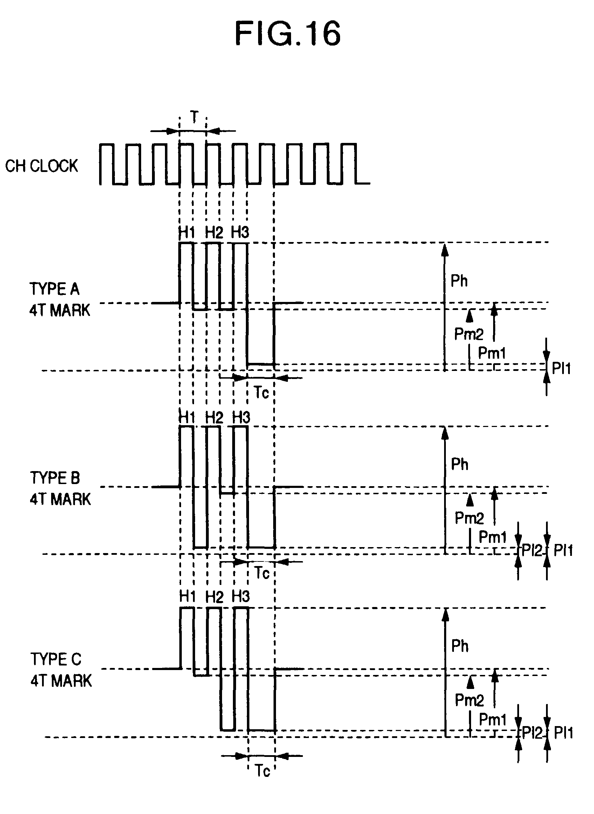

As explained in the aspects of the present invention, in the present embodiment, the recording is carried out for three kinds of recording waveforms of type A, type B and type C as shown in Fig. 16 for recording the 4 T mark by using three high-power pulses. To be more specific, the type A is a recording waveform in which the power level between the first high-power pulse H1 and the second high-power pulse H2 and between H2 and the third high-power pulse H3 is set at the Pm2 level. Type B is a recording waveform in which the power level between H1 and H2 is set at P12 and the power level between H2 and H3 is set at the Pm2 level. Further, the type C is a recording waveform in which the power level between H1 and H2 is set at Pm2 and the power level between H2 and H3 is set at the P12 level. The cooling pulse width Tc is set at 1 T for each waveform.

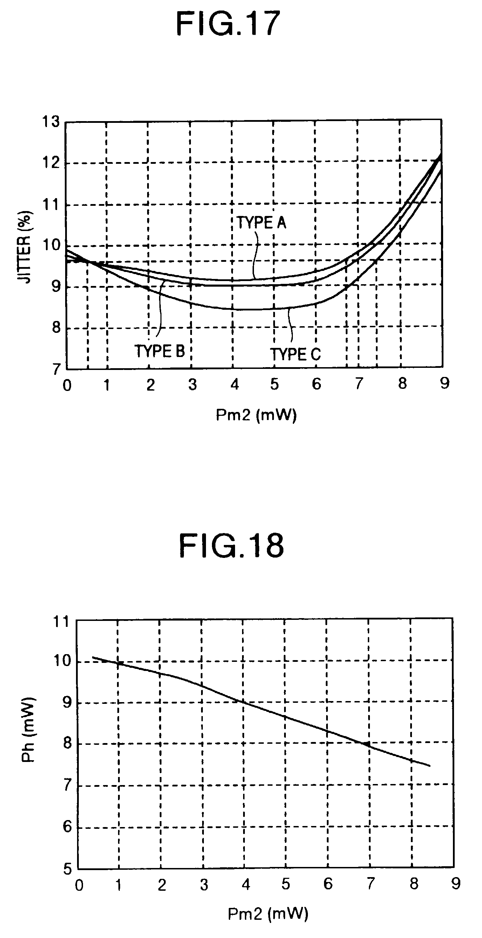

For each of the types A, B and C waveforms, the result of measuring the Pm2 dependency of jitter values is shown in Fig. 17. For each waveform, an optimum jitter value exists for Pm2, and the jitter value becomes the lowest when Pm2 is 4.0 mW which is equal to Pm1. Among the recording waveforms, the jitter value of the type C is the lowest, and the jitter value of the type B becomes the second lowest and the jitter value of the type A becomes the third lowest. In the case of the type C of the recording waveform, there arises an effect when Pm2 is set at a level not lower than P12 when Pm2 is not lower than 0.5 mW and not higher than 7.5 mW. This indicates that there arises an effect of a jitter reduction when Pm2 is larger than P12 and not higher than approximately 200 % of Pm1. In the case of the type A of the recording waveform, there arises an effect when Pm2 is set at a level higher than P12 when Pm2 is not lower than 0.5 mW and not higher than 6.8 mW. This indicates that there arises an effect of a jitter reduction when Pm2 is larger than P12 and not higher than 170 % of Pm1. Further, for all the recording waveforms, particularly a large effect is obtained when Pm2 is not lower than 50 % and not higher than 170 % of Pm1.

Next, for the type C recording waveform, the Pm2 dependency of the power level Ph of the high-power pulse required for the recording is shown in Fig. 18. In this case, the value of Ph at which the jitter value becomes the minimum is shown for each Pm2. Each power level other than Ph and Pm2 in this case is shown below.

Ph : variable
Pm1 : 4.0 mW
Pm2 : variable
P11 : 0.5 mW
P12 : 0.5 mW

It is known that Ph is simply going down when Pm2 increases. A similar effect is also obtained for the type A and B recording waveforms. As explained above, the recording sensitivity improves when the power level Pm2 which is immediately after the header high-power pulse of a series of continuous high-power pulse trains and immediately before the end tail high-power pulse is set at a higher level than the power level P12 of the high-power pulses other than the header and end tail high power levels. Particularly, a satisfactory jitter value can be obtained when Pm2 is higher than P12 and not higher than 200 % of Pm1. Further, it is particularly desirable when Pm2 is not lower than 50 % and not higher than 170 % of Pm1, as described above.

The above-described recording waveforms are effective for improving the recording sensitivity while keeping the heat balance (including the cooling speed) between the front end of the mark and the rear end of the mark at the time of recording the mark. For example, the recording waveforms are also effective for the information recording medium having a medium structure of a relatively rapid cooling such as the disk A shown in Fig. 6 described in Embodiment 4.

Since the recording waveform generating circuit 6 for generating the above-described waveforms can change the width of the cooling pulse as described in Embodiment 3, the recording waveform generating circuit can meet the high speed of the disk linear velocity and further can record information on the information recording mediums having various cooling speeds.

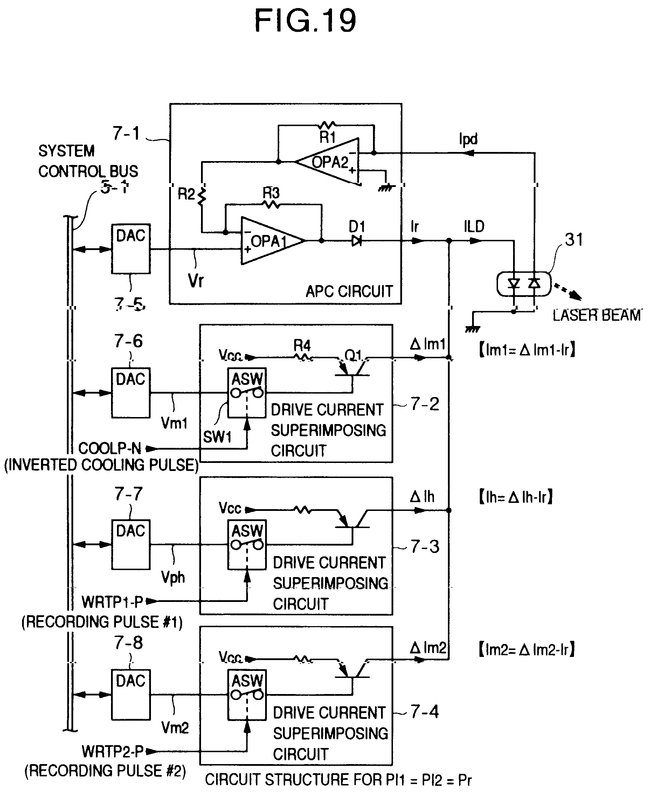

Fig. 19 shows a functional block diagram of the laser driving circuit (block 7 in Fig. 13). The laser driving circuit is structured by an APC circuit 7-1, three series of drive current superimposing circuits 7-2, 7-3 and 7-4, and four series of DA converters (DAC) 7-5, 7-6, 7-7 and 7-8. By a data transfer from a system control bus (abbreviated as a sysconbus) 5-1 of the system controller, an output value Vr of the DA converter 7-5 for the APC is set. In the mean time, a laser beam is generated when an output current Ir is supplied to a semiconductor laser 31. When a part of the laser beam is returned to a photo-diode for a monitor, a monitor current Ipd flows. The current Ipd is converted to a voltage by the operation of a resistor R1 and an operating amplifier OPA2

(converted voltage = - Ipd × P1 ). The voltage is inputted to an operating amplifier OPA1 through a resistor R2, and this voltage is compared with the output voltage Vr of the DA converter 7-5. Thus, the output current Ir is controlled so that the output voltage of the OPA2 (which is proportional to the intensity of the laser beam) and the output value Vr (a target value of the laser output power) are balanced. A loop gain of the APC circuit is determined by the ratio of the resistor R2 to R3, and a diode D1 is used for preventing an inverse flow of a superimposing current (to be described later). In the mean time, when an inverted cooling pulse COOLP-N is at a high level, an analog switch (ASW) SW1 is in the closed state. Since an output voltage Vm1 of the DA converter 7-6 for superimposing the first current set by the data transfer from the system control bus (abbreviated as sysconbus) 5-1 of the system controller (block 5 in Fig. 8) is being applied to the base of the transistor Q1, a current ΔIm1 for superimposing an erasing power (Pm1, reference Figs. 1 to 4) expressed by the following (expression 1) is superimposed on the current Im1.

$$\Delta Im = (Vcc - Vm1 - 0.7) \div R4 \qquad (1)$$

In this case, when the inverted cooling pulse COOLP-N is set at a low level, the analog switch (ASW) SW1 is set to an open state, so that the transistor Q1 is turned off and the superimposed current ΔIm1 does not flow. Similarly, when a recording pulse #1 (WRTP1-P) is at a high level, a superimposed current ΔIh (a superimposed current for generating the high-level power Ph for recording, reference Fig. 15) flows, and when a recording pulse #2 (WRTP2-P) is at a high level, a superimposed current ΔIm2 (a superimposed current for generating the laser power Pm2 for the intermediate power level immediately before the header high-power pulse among a series of continuous high-power pulse trains and immediately before the end tail high-power pulse, reference Fig. 15) flows.

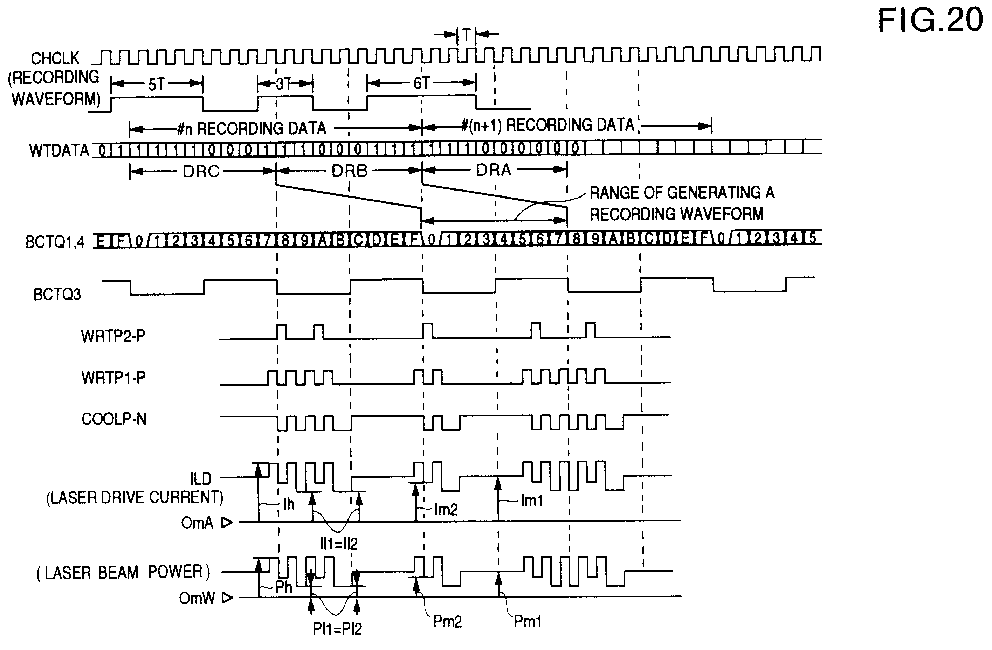

Fig. 20 is a diagram for showing the above-described operation in a time chart. The diagram shows the state that a serial signal input WTDATA for showing a recording waveform synchronous with a channel clock CHCLK is stored in the data register DRA in a unit of eight bits, the contents of the register DRA are shifted to the next register DRB, and similarly, the data of the register DRB is shifted to DRC (reference Fig. 9). At each closing edge of the half-byte clock Q3 at the fourth bit from the lowest order of the binary counter BCT (6-11 in Fig. 9), the laser drive timing signals WRTP2-P, WRTP1-P and COOLP-N are generated by corresponding to the contents of the data register DRB and by referring to the contents of the DRA which stores the data before the half-byte clock timing and the contents of the DRC which stores the data after the half-byte clock timing. When the above-described three kinds of laser drive timing signals WRTP2-P, WRTP1-P and COOLP-N are inserted into the laser driving circuit (Fig. 19), a predetermined laser drive current Id1 flows and a necessary laser beam output can be obtained.

As explained in Embodiment 3, the I-P (current versus optical output) characteristic diagram of a semiconductor laser (31 in Fig. 19) used in the embodiment of the present invention is as shown in Fig. 12. Also in the present embodiment, when a laser current is Ir mA, a laser optical output is Pr mW, when ΔIm1 mA is superimposed on the Ir, the laser current becomes Im1 mA and the optical output becomes Pm1 mW, and further when ΔIh mA is superimposed on the laser current, the laser current flows by Ih mA and the optical output becomes Ph mW, and similarly when further ΔIm2 mA is superimposed on the laser current, the laser current flows by Im2 mA, and as a result the optical output becomes Pm2 mW.

In the above explanation, the case is shown where Pm1 and Pm2 are set at different values. In the case of setting Pm1 and Pm2 at the same level, the laser drive timing signal WRTP2-P in Fig. 20 is set at always zero, the portion of the downward directed COOLP-N corresponding to the timing of irradiating Pm2 in the above explanation is deleted, and the current Im1 is flown to the semiconductor laser 31 in Fig. 19. In this case, the drive current superimposing circuit 7-4 and the DA converter (DAC) 7-8 are not necessary. This is desirable since the circuit scale of not only the laser driving circuit but also the recording waveform generating circuit can be reduced.

Embodiment 8

Information is recorded on the disk B shown in Fig. 6 explained in Embodiment 4, by using the recording apparatus (Fig. 13) explained in Embodiment 6 and by using the recording waveform relating to Claim 21. Detailed explanation will be made below.

Information from the outside of the recording apparatus is transferred to an eight-sixteen modulator 8 using eight bits as one unit. When information is recorded on the disk 1, a modulation system for converting eight bits into sixteen bits, the so-called eight-sixteen modulation system, is used. According to this modulation system, information of mark lengths of 3 T to 11 T corresponding to the eight-bit information is recorded on the medium. The eight-sixteen modulator shown in the drawing carries out this modulation. In this case, T denotes a cycle of the clock at the time of recording the information, and T is set at 22.8 ns in this case. The disk linear velocity is set at a relatively high linear velocity of 9 m/s.

Digital signals of 3 T to 11 T converted by the eight-sixteen modulator 8 are transferred to a recording waveform generating circuit 6, and a recording waveform to be described later is generated.

A recording waveform generated by the recording waveform generating circuit is transferred to a laser driving circuit 7, and the laser driving circuit makes a semiconductor laser located within an optical head 2 emit a laser beam based on this recording waveform.

In the optical head 2 mounted on the recording apparatus, a semiconductor laser having an optical wavelength of 650 nm for an energy beam for recording information, is used. This laser beam is focused on the recording film of the disk 1 with an objective lens which has a numerical aperture of 0.6. Information is recorded by irradiating a laser beam of the energy corresponding to the above-described recording waveform. In this case, the diameter of the laser beam is approximately 1 μm and the laser beam is polarized to apply a circularly polarized light.

The present recording apparatus corresponds to a system for recording information on both a groove and a land (an area between grooves) (the so-called land-groove recording system). In the present recording apparatus, a tracking for a land and a groove can be selected freely by an L/G servo circuit.

A reproduction of recorded information is also carried out by using the optical head 2. A focused laser beam which has the same size as that at the time of the recording is irradiated on the recorded mark, and the lights reflected from the mark and from portions other than the mark are detected to obtain a reproduced signal. The amplitude of the reproduced signal is amplified by a pre-amplifier circuit 4 and the amplified signal is transferred to an eight-sixteen demodulator 10. The eight-sixteen demodulator 10 converts the signal into eight-bit information at every sixteen bits. With the above operation, the reproduction of the recorded mark is completed.

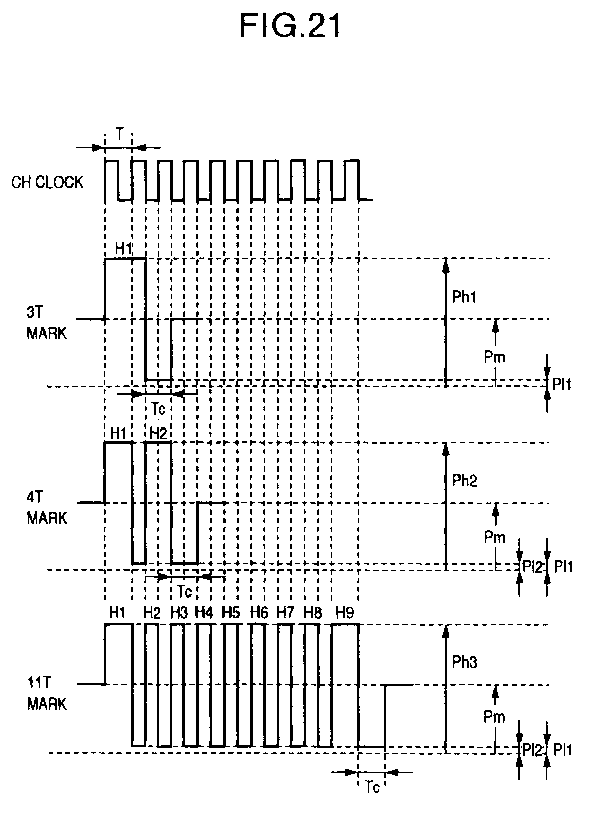

In order to evaluate the signal quality of the reproduced signal, each power level of the recording waveform shown in Fig. 21 is set as follows and information is recorded, and jitter values of the reproduced signal are measured.

Ph1 : 9.0 mW
Ph2 : 9.5 mW
Ph3 : 10.0 mW
Pm : 4.5 mW
P11 : 0.5 mW
P12 : 0.5 mW.

The recording waveforms shown in Fig. 21 will be explained in detail below. Similar to the recording waveforms so far explained, in these recording waveforms, marks of various lengths starting from a 3 T mark which is the shortest mark to an 11 T mark which is the longest mark (there is a case where a 14 T mark is recorded for synchronization with a reproduction clock, and in this case, the longest mark is the 14 T mark) are recorded by a series of continuous high-power pulse trains of the high-power pulse levels Ph1, Ph2 and Ph3. In this case, the recording of each mark is carried out by (N - 2) high-power pulse trains which is two smaller than the number of clock N to be recorded, such as the 3 T mark is recorded by one high-power pulse and the 4 T mark is recorded by two high-power pulse trains. The power level of the high-power pulse for recording the 3 T mark is set at Ph1, the power level of the high-power pulse trains for recording the 4 T mark is set at Ph2, and the power level of the high-power pulse trains for recording the 5 T to 11 T is set at Ph3. In this case, it is important to set the relationship of the power levels among these high-power pulses as Ph1 < Ph2 < Ph3. Further, basically, the width of the header high-power pulse and the end tail high-power pulse of the recording waveform is set at 1 T, and the width of the high-power pulses other than the header and end tail high-power pulses is set at 0.5 T. Since the header and end tail high-power pulses are set at the same width, recording is carried out by the high-power pulse of 1.5 T as the recording waveform for recording the 3 T mark which is the shortest mark. Further, the width between the high-power pulses is set at 0.5 T. The width of the cooling pulse is set at 1.5 T.

Further, the value of the power level P11 of the cooling pulse is set at a value equal to the set value of the power level P12 between the high-power pulses. The intermediate power level Pm among a series of continuous high-power pulse trains is set to have a relationship of Ph1 > Pm > P12.

As a result of carrying out a random signal of EFM on the above-described information recording medium by setting the waveforms as described above, it is possible to obtain a satisfactory jitter value of not higher than 9 %. As shown in Embodiment 2, when the recording waveform shown in Fig. 3 is used, the power level of the high-power pulse is 11.5 mW. However, it is possible to reduce the power level of the high-power pulse to 10 mW when the recording waveform explained in the present embodiment is used.

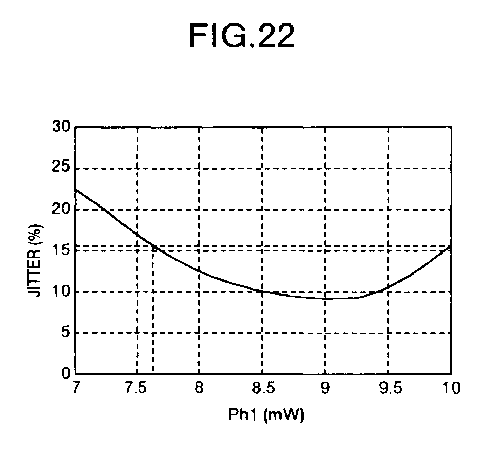

Fig. 22 shows changes of jitter values for the case where a similar recording is carried out by changing Ph1 without changing Ph3 and by setting Ph2 as Ph2 = (Ph1 + Ph3)/2 . An optimum jitter value exists for Ph1 (Ph2), and a jitter value is lowered when Ph1 is not lower than 7.6 mW which corresponds to 76 % of Ph3 and is lower than Ph3. Thus, there arises an effect when Ph1 (Ph2) is set lower than Ph3. Particularly, there is a large effect when Ph1 is not lower than 85 % and not higher than Ph3. When Ph1 is lower than 76 % of Ph3, there is no reduction in jitter value. The above effect is also obtained when Ph2 = Ph3 . However, a larger effect is obtained when Ph2 = (Ph1 + Ph3)/2 as explained above.

As explained above, an improved recording sensitivity is obtained and a satisfactory recording can be carried out when a recording waveform is used in which the widths of the header and end tail high-power pulses among a series of continuous high-power pulse trains is set larger than the widths of high-power Pulses other than the header and end tail high-power pulses and at least the power level of the high-power pulse of the shortest mark is set lower than the power level of the longest mark.

In addition to the method of making larger only the width of the header and end tail high-power pulses as explained like in the above-described embodiment, there is also a method for making larger the width of all the high-power pulses by a certain volume and making smaller the width between the high-power pulses by the same volume (that is, making larger the duty of the high-power pulse). This method can be applied to all the recording waveforms shown in the present invention. As the information recording apparatus, for example, a delay circuit for delaying the rear end edge of the high-power pulse or cooling pulse by a certain volume may be mounted between the recording waveform generating circuit and the laser driving circuit shown in Figs. 8 and 13 as explained in other embodiments.

When the information recording medium is on the disk and a rotation control of the CAV system is carried out, for example, the relative speed of the energy beam and the information recording medium changes at the inner periphery and the outer periphery of the information recording medium. In this case, information is transmitted so that the system controller recognizes the relative speed of the energy beam and the information recording medium and that a delayed volume according to the relative speed is generated in the delay circuit. When this method is used together with the above-described method of making larger the width of the cooling pulse according to the relative speed of an energy beam and the information recording medium, it is of course possible to obtain an improved recording sensitivity and to carry out a satisfactory recording by using the energy beam of a low-cost low-output semiconductor laser or the like, when, for example, such a high-speed rotation as the relative speed exceeds 12 m/s is carried out.

As explained in detail above, it is possible to carry out a satisfactory recording even if the disk linear velocity has changed when the information recording method and the information recording apparatus are used which change the width of the cooling pulse of the recording waveform at the time of recording information according to the disk linear velocity (the relative speed of the energy beam and the information recording medium).

Further, it is possible to carry out a satisfactory recording on information recording mediums of various cooling speeds when the information recording method and the information recording apparatus are used which change the width of the cooling pulse of the recording waveform at the time of recording information according to the cooling speed of the information recording medium (structure of the medium).

Further, it is possible to achieve a high-density recording when the information recording method and the information recording apparatus are used in which at least the recording waveform for recording the shortest mark is structured by a plurality of high-power pulses and the power level of the header pulse is set at a high level.

Further, it is possible to achieve a high-density recording when the information recording method and the information recording apparatus are used in which at least the recording waveform for recording the shortest mark is structured by a plurality of high-power pulses and the power level immediately after the header pulse is set at a level higher than the power level immediately after other high-power pulses. There is a large effect particularly when the power level immediately after the header pulse is not lower than 70 % and not higher than 140 % of the intermediate power level.

Further, it is possible to carry out a satisfactory recording on information recording mediums of various cooling speeds when the information recording method and the information recording apparatus are used in which at least the recording waveform for recording the shortest mark is structured by a plurality of high-power pulses and the power level between the high-power pulses and the power level of the cooling pulse are set at a level lower than the intermediate power level and the width of the cooling pulse is set at a level not smaller than 0.8 times and not larger than 2.2 times of the width of the channel clock. Particularly when the width of the cooling pulse is set at 1.0 times, 1.5 times and 2.0 times of the width of the channel clock respectively, the circuit scale of the recording waveform generating circuit can be made smaller. Among others, it is most desirable to set the width of the cooling pulse at 1.0 times of the width of the channel clock because the power margin of the intermediate power can be expanded at this width.

Further, it is possible to carry out an accurate recording of information without erasing the information on adjacent tracks when the above-described information recording method and information recording apparatus are used, in the case of recording the information on the information recording medium of a narrow track pitch according to which the size of the track pitch is not larger than the diameter of the energy beam for recording, particularly on the information recording medium corresponding to a land-groove recording.

Further, the recording sensitivity is improved and particularly a large effect is obtained in the improvement in the quality of the signal, when among a series of continuous high-power pulse trains, the power level immediately after the header high-power pulse and the power level immediately before the end tail high-power pulse are set at a level higher than the power level between high-power pulses other than the header and end tail high-power pulses and not higher than 200 % of the intermediate power level, and preferably, at a level not lower than 50 % and not higher than 170 % of the intermediate power level.

Further, it is possible to carry out an accurate recording without lowering the recording density even when the relative speed of the information recording medium and the energy beam for recording is increased or when a recording is carried out on the information recording medium of a structure that is easily cooled rapidly, by using a recording waveform in which, among a series of continuous high-power pulse trains, the width of the header and end tail high-power pulses is set larger than the width of the header and end tail high-power pulses, and at least among the high-power pulses of the shortest mark, the power level of the high-power pulse of the lowest power level is set lower than any one of the power levels of the high-power pulses for recording the longest mark and not lower than 75 % of the power level of the high-power pulse of the lowest power level among the power levels of the high-power pulses for recording the longest mark.

## Claims

1. An information recording method of carrying out a recording of information by irradiating an energy beam to an information recording medium (1) by modulating power of said energy beam at least at a high power level and at an intermediate power level lower than said high power level, wherein a recording is carried out in a recording waveform having a downward directed pulse toward a power level lower than said intermediate power level after continuous high-power pulse trains so that the width of said downward directed pulse is changed according to a relative speed of an energy beam and said information recording medium (1).

2. An information recording method of carrying out a recording of information by irradiating an energy beam to an information recording medium (1) by modulating power of said energy beam at least at a high power level and at an intermediate power level lower than said high power level and for carrying out a test writing to said information recording medium (1) prior to a recording of information, wherein at the time of said test writing, a recording is carried out in a recording waveform having a downward directed pulse toward a power level lower than said intermediate power level after continuous high-power pulse trains so that the width of said downward directed pulse is changed accordingly.

3. An information recording method of carrying out a recording of information by forming recording marks of a plurality of lengths by irradiating an energy beam to an information recording medium (1) by modulating power of said energy beam at least at a high power level and at an intermediate power level lower than said high power level, wherein at least a shortest mark is recorded by using continuous high-power trains and a power level of a header pulse is higher than a power level of a last high-power pulse.

4. An information recording method of carrying out a recording of information by forming recording marks of a plurality of lengths by irradiating an energy beam to an information recording medium (1) by modulating power of said energy beam at least at a high power level and at an intermediate power level lower than said high power level, wherein at least a shortest mark is recorded by using continuous high-power trains and a power level immediately after a header pulse is not lower than a power level immediately after a high-power pulse other than said header pulse.

5. An information recording apparatus for carrying out a recording of information by irradiating an energy beam to an information recording medium (1) by modulating power of said energy beam at least at a high power level and at an intermediate power level lower than said high power level, wherein said information recording apparatus has a recording waveform generator (6) for generating a recording waveform having a downward directed pulse toward a power level lower than said intermediate power level after continuous high-power pulse trains so that the width of said downward directed pulse is changed according to a relative speed of an energy beam and said information recording medium (1).

6. An information recording apparatus for carrying out a recording of information by irradiating an energy beam to an information recording medium (1) by modulating power of said energy beam at least at a high power level and at an intermediate power level lower than said high power level and for carrying out a test writing to said information recording medium (1) prior to a recording of information, wherein said information recording apparatus has a recording waveform generator (6) for generating, at the time of said test writing, a recording waveform having a downward directed pulse toward a power level lower than said intermediate power level after continuous high-power pulse trains so that the width of said downward directed pulse is changed accordingly.

7. An information recording apparatus for carrying out a recording of information by forming recording marks of a plurality of lengths by irradiating an energy beam to an information recording medium (1) by modulating power of said energy beam at least at a high power level and at an intermediate power level lower than said high power level, wherein said information recording apparatus has a recording waveform generator (6) for generating continuous high power trains at least at the time of recording a shortest mark and for making a power level of a header pulse higher than a power level of a last pulse.

8. An information recording apparatus for carrying out a recording of information by forming recording marks of a plurality of lengths by irradiating an energy beam to an information recording medium (1) by modulating power of said energy beam at least at a high power level and at an intermediate power level lower than said high power level, wherein said information recording apparatus has a recording waveform generator (6) for generating continuous high power trains at least at the time of recording a shortest mark and for making a power level immediately after a header pulse not lower than a power level immediately after a high-power pulse other than said header pulse.

9. An information recording method of carrying out a recording of information by irradiating an energy beam to an information recording medium (1) by modulating power of said energy beam at least at a high power level and at an intermediate power level lower than said high power level, wherein a recording is carried out in a recording waveform having a downward directed pulse toward a power level lower than said intermediate power level, between high-power pulses of continuous high-power pulse trains and immediately after said continuous high-power pulse trains, and the width of said downward directed pulse after said continuous high-power pulse trains is set at not smaller than 0.8 times and not larger than 2.2 times a channel clock.

10. An information recording apparatus for carrying out a recording of information by irradiating an energy beam to an information recording medium (1) by modulating power of said energy beam at least at a high power level and at an intermediate power level lower than said high power level, wherein said information recording apparatus has a recording waveform generator (6) for carrying out a recording in a recording waveform having a downward directed pulse toward a power level lower than said intermediate power level, between high-power pulses of continuous high-power pulse trains and immediately after said continuous high-power pulse trains, and for setting the width of said downward directed pulse after said continuous high-power pulse trains at not smaller than 0.8 times and not larger than 2.2 times a channel clock.

11. An information recording method according to Claim 9 or 10, wherein the width of said downward directed pulse after said continuous high-power pulse trains is set at an integer times one half of said channel clock.

12. An information recording method according to Claim 4 or 8, wherein a power level immediately after said header pulse is not lower than 70 % and not higher than 140 % of said intermediate power level.

13. An information recording method according to Claim 2, wherein information is recorded both on a land and within a groove on said information recording medium (1).

14. An information recording apparatus according to Claim 6, wherein said information recording apparatus has tracking servo means for recording information both on a land and within a groove on said information recording medium (1).

15. An information recording method for carrying out a recording of information by forming recording marks of a plurality of lengths by irradiating an energy beam to an information recording medium (1) by modulating power of said energy beam at least at a high power level and at an intermediate power level lower than said high power level, wherein at least a longest mark is recorded by using continuous high power trains and, among a series of continuous high-power pulse trains, a power level immediately after a header high-power pulse and a power level immediately before an end tail high-power pulse are higher than power levels between the rest of high-power pulses.

16. An information recording method according to Claim 15, wherein, among said series of continuous high-power pulse trains, a power level immediately after a header high-power pulse and a power level immediately before an end tail high-power pulse are higher than power levels between high-power pulses other than said header and end tail high-power pulses and are not higher than 200 % of said intermediate power level.

17. An information recording method according to Claim 16, wherein, a shortest mark is recorded by two power pulses, a second shortest mark is recorded by three high-power pulses, a third shortest mark is recorded by four high-power pulses, and a power level between first and second high-power pulses at the time of recording a shortest mark, a power level between first and second high-power pulses at the time of recording a second shortest mark, a power level between first and second high-power pulses at the time of recording a third shortest mark and a power level between third and fourth high-power pulses are not lower than 50 % and not higher than 170 % of said intermediate power level.

18. An information recording method according to Claim 17, wherein, a power level between second and third high-power pulses at the time of recording a second shortest mark and a power level between second and third high-power pulses at the time of recording a third shortest mark are not higher than 50 % of said intermediate power level.

19. An information recording method for carrying out a recording of information by forming recording marks of a plurality of lengths by irradiating an energy beam to an information recording medium (1) by modulating power of said energy beam at least at a high power level and at an intermediate power level lower than said high power level, wherein at least a power level of a high-power pulse for recording a shortest mark is lower than a power level of a high-power pulse for recording a longest mark.

20. An information recording method according to Claim 19, wherein at least, among high-power pulses for recording a shortest mark, a power level of a high-power pulse of a lowest power level is lower than any one of power levels of high-power pulses for recording a longest mark, and is not lower than 75 % of power level of a high-power pulse of a lowest power level among power levels of high-power pulses for recording a longest mark.

21. An information recording apparatus for carrying out a recording of information by forming recording marks of a plurality of lengths by irradiating an energy beam to an information recording medium by modulating power of said energy beam at least at a high power level and at an intermediate power level-lower than said high power level, wherein said information recording apparatus has a recording waveform generator (6) for generating at least one recording waveform among recording waveforms according to the information recording method described in Claim 19.

22. An information recording method of recording information by forming marks having a plurality of lengths by irradiating beams having energy on an information recording medium (1), wherein at the time of recording one of said marks, said energy beams are irradiated as pulse trains, and a falling level of said pulse trains nearest to a header of said mark is set at level higher than a falling level of a pulse train which follows next.

# FIG.1

# FIG.2

# FIG.3

# FIG.4

# FIG.5

# FIG.6A

| | |
|---|---|
| ULTRAVIOLET-RAYS SETTING RESIN PROTECTION FILM | |
| AI-Ti REFLECTION FILM | 100 nm |
| ZnS-SiO2 UPPER PROTECTION FILM | 20 nm |
| Ag-Ge-Sb-Te RECORDING FILM | 20 nm |
| ZnS-SiO2 LOWER PROTECTION FILM | 80 nm |
| POLYCARBONATE SUBSTRATE | |

# FIG.6B

| | |
|---|---|
| ULTRAVIOLET-RAYS SETTING RESIN PROTECTION FILM | |
| AI-Ti REFLECTION FILM | 100 nm |
| Si INTERFERENCE LAYER | 70 nm |
| ZnS-SiO2 UPPER PROTECTION FILM | 20 nm |
| Ag-Ge-Sb-Te RECORDING FILM | 20 nm |
| ZnS-SiO2 LOWER PROTECTION FILM | 80 nm |
| POLYCARBONATE SUBSTRATE | |

# FIG.7

# FIG.8

# FIG.9

# FIG.10

SYSTEM
CONTROL BUS
5-1

7-1

APC CIRCUIT

7-5

DAC

Vr

31

LASER BEAM

【Im= △ Im-Ir】

7-6

DAC

Vm

SW1

COOLP-N
(INVERTED COOLING PULSE)

DRIVE CURRENT
SUPERIMPOSING
CIRCUIT

7-2

△ Im

7-7

DAC

Vp1

WRTP1-P
(RECORDING PULSE #1)

DRIVE CURRENT
SUPERIMPOSING
CIRCUIT

7-3

△ Ih1    【Ih1= △ Ih1-Ir】

7-8

DAC

Vp2

WRTP2-P
(RECORDING PULSE #2)

DRIVE CURRENT
SUPERIMPOSING
CIRCUIT

7-4

△ Ih2    【Ih2= △ Ih2-Ir】

CIRCUIT STRUCTURE FOR
Pm1 = Pm2 = Pm, and Pl1 = Pl2 = Pr

# FIG.11

EP 0 802 531 A2

# FIG.12

# FIG.13

SIGNAL OUTPUT

SIGNAL INPUT

EP 0 802 531 A2

# FIG.14

38

# FIG.15

# FIG.16

# FIG.17

# FIG.18

# FIG.19

SYSTEM
CONTROL BUS
5-1

7-1

R1
OPA2
Ipd

R2  R3
OPA1  D1  Ir  ILD
DAC
Vr
APC CIRCUIT
7-5

31

LASER BEAM

【Im1=△Im1-Ir】

7-6
DAC
Vcc  R4  Q1  △Im1
ASW
Vm1  SW1  DRIVE CURRENT
COOLP-N  SUPERIMPOSING  7-2
(INVERTED COOLING PULSE)  CIRCUIT

7-7
DAC
Vcc  △Ih  【Ih=△Ih-Ir】
ASW
Vph  DRIVE CURRENT
WRTP1-P  SUPERIMPOSING  7-3
(RECORDING PULSE #1)  CIRCUIT

7-8
DAC
Vcc  △Im2  【Im2=△Im2-Ir】
ASW
Vm2  DRIVE CURRENT
WRTP2-P  SUPERIMPOSING  7-4
(RECORDING PULSE #2)  CIRCUIT

CIRCUIT STRUCTURE FOR Pl1 = Pl2 = Pr

# FIG.20

EP 0 802 531 A2

# FIG.21

# FIG.22